# EUROPEAN PATENT APPLICATION

(11) **EP 4 618 210 A1**
(43) Date of publication of application: **17.09.2025**
(21) Application number: 25155983.7
(22) Date of filing: 05.02.2025
(51) Int. Cl.: H01M 10/04, H01M 50/103, H01M 50/528, H01M 50/533, H01M 50/536, B23K 20/10

(54) **BATTERY, JOINING JIG, JOINING DEVICE, AND MANUFACTURING METHOD OF BATTERY**

(30) Priority: 12.03.2024 JP 2024038055
(71) Applicant: Kabushiki Kaisha Toshiba, Tokyo 105-0023 (JP)
(72) Inventor: AIZAWA, Takahiro, Tokyo 105-0023 (JP); SHINOHARA, Yuto, Tokyo 105-0023 (JP)
(74) Representative: Hoffmann Eitle

(57) **Abstract**

A battery (1) of an embodiment includes an electrode group (2), a lead (17), a groove (23), and at least one recess (33). The electrode group (2) includes a current collecting bundle portion (12) protruding toward one side in a length direction (L1,L2). The lead (17) is joined to the current collecting bundle portion (12) with being stacked on the current collecting bundle portion (12) from one side in a thickness direction (C1,C2) crossing the length direction (L1,L2). The groove (23) is recessed to a groove bottom portion (26) toward a side where the lead (17) is located in the thickness direction (C1,C2) in a joint part of the lead (17) and the current collecting bundle portion (12), and does not protrude, relative to the lead (17), to a side where the current collecting bundle portion (12) protrudes. Each of the at least one recess (33) is further recessed from the groove bottom portion (26) toward the side where the lead (17) is located.

## Description

### FIELD

Embodiments described herein relate generally to a battery, a joining jig, a joining device, and a manufacturing method of a battery.

### BACKGROUND

A battery such as a lithium ion secondary battery includes an electrode group, and the electrode group includes a positive electrode and a negative electrode. In the electrode group, each of the positive electrode and negative electrode includes a current collector. In the current collector, a current collecting bundle portion, in which a plurality of current collecting strip portions are bundled, is formed. In the electrode group, the current collecting bundle portion protrudes toward one side in a length direction. In the battery, the current collecting bundle portion of the current collector is electrically connected to a terminal, with a lead or the like being interposed. The current collecting bundle portion is joined to the lead by ultrasonic welding or the like, and in the battery, a joint part of the current collecting bundle portion and the lead is formed.

In the manufacture of the battery, the current collecting bundle portion is joined to the lead by using a joining jig in which at least one protrusion protrudes from a stand seat portion. In the joining of the current collecting bundle portion to the lead, the lead is stacked on the current collecting bundle portion from one side in a thickness direction of the electrode group, and a joining target portion in which the current collecting bundle portion and the lead are stacked is clamped between the joining jig and a stage. Then, in the state in which the joining target portion is clamped between the joining jig and the stage, the lead and the current collecting bundle portion are joined, for example, by transmitting ultrasonic vibration to the joining target portion through the joining jig. In the state in which the joining of the joining target portion is being performed, at least one protrusion of the joining jig is put in contact with the joining target portion from an opposite side to the side on which the lead is stacked. Thus, in the joint part in which the lead and the current collecting bundle portion are joined, a recess that is recessed toward the side on which the lead is located is formed in each of parts with which the at least one protrusion is put in contact.

In addition, the strength of joining at the joint part is increased by joining the current collecting bundle portion to the lead in a state in which the stand seat portion, in addition to the at least one protrusion, is put in contact with the joining target portion. In this case, in the joint part of the lead and the current collecting bundle portion, a groove bottom portion of a groove, which is recessed toward the side on which the lead is located, is formed in a part with which the stand seat portion is put in contact, and a recess, which is further recessed from the groove bottom portion of the groove toward the side on which the lead is located, is formed in each of parts with which the at least one protrusion is put in contact.

Here, in the case where the joining is performed in the state in which the stand seat portion, in addition to the at least one protrusion, is put in contact with the joining target portion, there is a case where the joint part including the current collecting bundle portion is improperly deformed, such as a case where the joint part excessively expands toward the side on which the current collecting bundle portion protrudes, depending on the position of contact, the area of contact, and the like of the stand seat portion. In the joining of the current collecting bundle portion to the lead, it is required to suppress improper deformation of the joint part due to joining, while increasing the strength of joining in the joint part.

### BRIEF DESCRIPTION OF THE DRAWINGS

FIG. 1 is a schematic diagram illustrating an example of a configuration of a battery according to a first embodiment.
FIG. 2 is a cross-sectional view schematically illustrating an example of a configuration of an electrode group in the battery according to the first embodiment, by a cross section perpendicular or substantially perpendicular to a width direction of the electrode group.
FIG. 3 is a schematic diagram illustrating an example of a configuration of a joint part (connection part) of one current collecting bundle portion of the electrode group to a lead, and a vicinity thereof, in the battery according to the first embodiment, FIG. 3 illustrating a state as viewed from one side in a thickness direction of the electrode group.
FIG. 4 is a cross-sectional view schematically illustrating a cross section along an imaginary line A1 in FIG. 3.
FIG. 5 is a cross-sectional view schematically illustrating a cross section along an imaginary line A2 in FIG. 3.
FIG. 6 is a schematic diagram illustrating an example of a configuration of a joining device used in the manufacture of the battery in the first embodiment.
FIG. 7 is a perspective view schematically illustrating an example of a configuration of a joining tip portion of a joining jig according to the first embodiment.
FIG. 8 is a cross-sectional view schematically illustrating an example of a state in which one current collecting bundle portion of the electrode group is joined to the lead in the first embodiment, by a cross section perpendicular or substantially perpendicular to the width direction of the electrode group.
FIG. 9 is a cross-sectional view schematically illustrating an example of a state in which one current collecting bundle portion of the electrode group is joined to the lead in the first embodiment, by a cross section perpendicular or substantially perpendicular to a length direction of the electrode group.
FIG. 10 is a schematic diagram illustrating an example of a configuration of a joint part (connection part) of one current collecting bundle portion of an electrode group to a lead, and a vicinity thereof, in a battery according to a first modification, FIG. 10 illustrating a state as viewed from one side in a thickness direction of the electrode group.
FIG. 11 is a schematic diagram illustrating an example of a configuration of a joint part (connection part) of one current collecting bundle portion of an electrode group to a lead, and a vicinity thereof, in a battery according to a second modification, FIG. 11 illustrating a state as viewed from one side in a thickness direction of the electrode group.
FIG. 12 is a schematic diagram illustrating an example of a configuration of a joint part (connection part) of one current collecting bundle portion of an electrode group to a lead, and a vicinity thereof, in a battery according to a third modification, FIG. 12 illustrating a state as viewed from one side in a thickness direction of the electrode group.
FIG. 13 is a cross-sectional view schematically illustrating a cross section along an imaginary line A3 in FIG. 12.
FIG. 14 is a perspective view schematically illustrating an example of a configuration of a joining tip portion of a joining jig according to the third modification.

### DETAILED DESCRIPTION

The problem to be solved by the present invention is to provide a battery, a joining jig, a joining device, and a manufacturing method of a battery, which can suppress improper deformation of a joint part due to joining, while increasing the strength of joining in the joint part, in the joining of a current collecting bundle portion of an electrode group to a lead.

According to an embodiment, a battery includes an electrode group, a lead, a groove, and at least one recess. The electrode group includes a current collecting bundle portion protruding toward one side in a length direction. The lead has electrical conductivity, and is joined to the current collecting bundle portion in a state in which the lead is stacked on the current collecting bundle portion from one side in a thickness direction of the electrode group, which crosses the length direction. The groove includes a groove bottom portion, and is recessed to the groove bottom portion toward a side on which the lead is located in the thickness direction, in a joint part of the lead and the current collecting bundle portion. The groove does not protrude, with respect to the lead, to a side on which the current collecting bundle portion protrudes in the length direction. Each of the at least one recess is further recessed from the groove bottom portion of the groove toward the side where the lead is located.

Hereinafter, an embodiment is described with reference to the accompanying drawings.

### (First Embodiment)

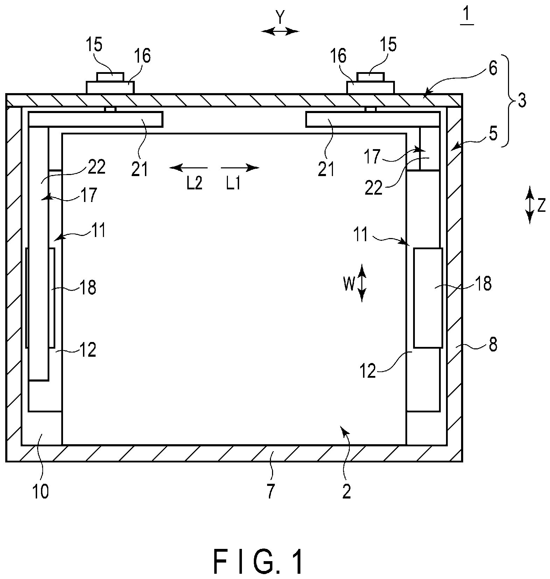

FIG. 1 schematically illustrates an example of a configuration of a battery 1 according to a first embodiment. The battery 1 of the example of FIG. 1 includes an electrode group 2 and a container unit 3. The container unit 3 includes an outer container 5 and a lid 6. Here, in the battery 1 and container unit 3, a depth direction (a direction perpendicular or substantially perpendicular to the drawing sheet of FIG. 1), a lateral direction (a direction indicated by arrow Y) crossing (perpendicular or substantially perpendicular to) the depth direction, and a height direction (a direction indicated by arrow Z) crossing (perpendicular or substantially perpendicular to) both the depth direction and the lateral direction, are defined. In each of the battery 1 and container unit 3, a dimension along the depth direction is less than a dimension along the lateral direction and a dimension along the height direction. Note that FIG. 1 illustrates a cross section perpendicular or substantially perpendicular to the depth direction.

The outer container 5 includes a bottom wall 7 and a peripheral wall 8. In the inside of the outer container 5, an inner cavity 10 in which the electrode group 2 is housed is defined by the bottom wall 7 and peripheral wall 8. In the outer container 5, the inner cavity 10 opens toward an opposite side to the side where the bottom wall 7 is located in the height direction. The lid 6 is attached to the peripheral wall 8 at an end portion on an opposite side to the bottom wall 7. Thus, the lid 6 closes the opening of the inner cavity 10 of the outer container 5. The lid 6 and bottom wall 7 face each other, with the inner cavity 10 being interposed.

The electrode group 2 includes a positive electrode and a negative electrode. In the electrode group 2, a separator is interposed between the positive electrode and the negative electrode. In the electrode group 2, the separator is formed of a material having an electrical insulation property, and electrically insulates the positive electrode from the negative electrode. In the electrode group 2, the positive electrode includes a positive electrode current collector such as a positive electrode current collecting foil, and a positive electrode active material-containing layer coated (supported) on a surface of the positive electrode current collector. In addition, the positive electrode current collector includes an uncoated portion 11 on which the positive electrode active material-containing layer is not coated (not supported). Further, in the electrode group 2, the negative electrode includes a negative electrode current collector such as a negative electrode current collecting foil, and a negative electrode active material-containing layer coated (supported) on a surface of the negative electrode current collector. In addition, the negative electrode current collector includes an uncoated portion 11 on which the negative electrode active material-containing layer is not coated (not supported). Because of the above configuration, in the electrode group 2, the uncoated portion 11 of the positive electrode and the uncoated portion 11 of the negative electrode 11 are formed as a pair of uncoated portions 11. Note that the uncoated portion 11 of the positive electrode is also referred to as "positive electrode uncoated portion", and the uncoated portion 11 of the negative electrode is also referred to as "negative electrode uncoated portion".

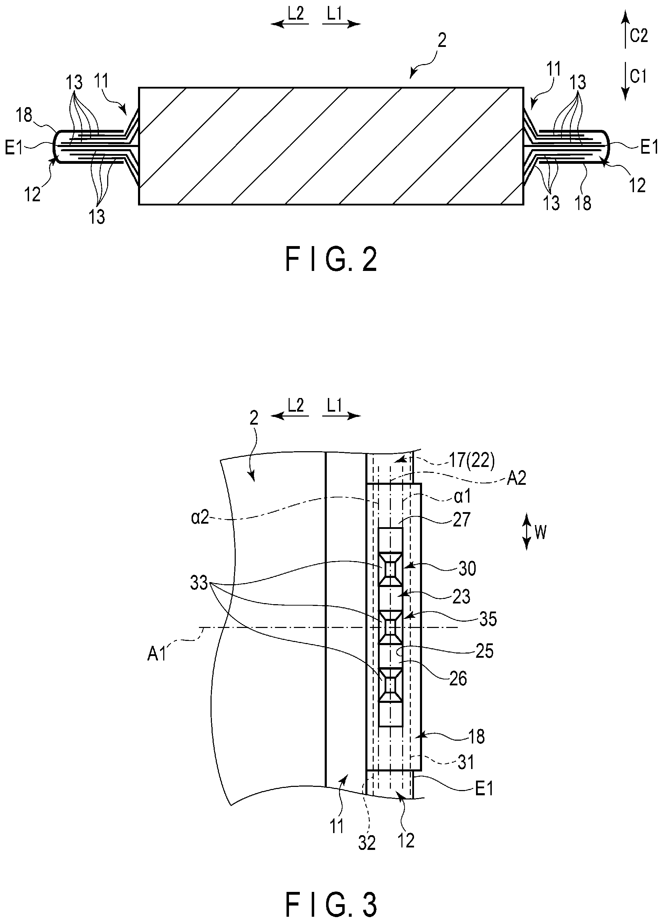

FIG. 2 schematically illustrates an example of a configuration of the electrode group 2 in the battery 1 according to the first embodiment. As illustrated in FIG. 1 and FIG. 2, in the electrode group 2, a length direction (a direction indicated by arrow L1 and arrow L2), a width direction (a direction indicated by arrow W) crossing (perpendicular or substantially perpendicular to) the length direction, and a thickness direction (a direction indicated by arrow C1 and arrow C2) crossing (perpendicular or substantially perpendicular to) both the length direction and the width direction, are defined. In the electrode group 2, a dimension along the thickness direction is less than a dimension along the length direction and a dimension along the width direction. Note that in FIG. 1, the electrode group 2 is illustrated in a state in which the electrode group 2 is viewed from one side in the thickness direction, and in FIG. 2, the electrode group 2 is illustrated by a cross section perpendicular or substantially perpendicular to the width direction.

In one example, the electrode group 2 is formed with a so-called winding structure, and the positive electrode, negative electrode and separator are wound around a winding axis, in the state in which the separator is interposed between the positive electrode and the negative electrode. In this case, in the electrode group 2, the winding axis of the winding structure extends along the length direction of the electrode group 2. In addition, in another example, the electrode group 2 is formed with a so-called stack structure, and in the electrode group 2, a plurality of positive electrode plates and a plurality of negative electrode plates are alternately stacked in the thickness direction of the electrode group 2. In this case, in the electrode group 2, the positive electrode is composed of the positive electrode plates, and the negative electrode is composed of the negative electrode plates. Further, the positive electrode plates and the negative electrode plates are stacked in the state in which the separator is interposed between the mutually neighboring positive electrode plate and negative electrode plate in the thickness direction (stacking direction).

In the inner cavity 10, an electrolytic solution (not illustrated) is held (impregnated) in the electrode group 2. The electrolytic solution may be an aqueous electrolytic solution such as an aqueous solution, or may be a nonaqueous electrolytic solution including an electrolyte dissolved in an organic solvent. In addition, a gel electrolyte or a solid electrolyte may be used in place of the electrolytic solution. In a case where a solid electrolyte is used as the electrolyte, the separator may be formed of the solid electrolyte in the electrode group 2. In addition, a gas release valve and a filling port may be formed in the lid 6 of the container unit 3. In this case, a sealing plate that closes the filling port is welded on an outer surface of the lid 6. Note that the gas release valve and the filling port may not be provided in the battery 1.

In the example of FIG. 1 and FIG. 2, in the electrode group 2, the positive electrode uncoated portion (the uncoated portion 11 of the positive electrode) protrudes toward one side in the length direction of the electrode group 2. In addition, in the electrode group 2, the negative electrode uncoated portion (the uncoated portion 11 of the negative electrode) protrudes toward an opposite side in the length direction to the side on which the positive electrode uncoated portion protrudes. In each of the paired uncoated portions 11, a current collecting bundle portion 12 is formed. In the example of FIG. 1 and FIG. 2, one current collecting bundle portion 12 is formed in each of the positive electrode uncoated portion and the negative electrode uncoated portion. Each of the current collecting bundle portions 12 includes a plurality of current collecting strip portions 13. In addition, in each of the current collecting bundle portions 12, the current collecting strip portions 13 are bundled in a state in which the current collecting strip portions 13 are stacked in the thickness direction of the electrode group 2. Thus, the stacking direction of the current collecting strip portions 13 in each of the current collecting bundle portion 12 agrees or substantially agrees with the thickness direction of the electrode group 2.

In the current collecting bundle portion 12 of the positive electrode uncoated portion, each of the bundled current collecting strip portions 13 is formed of the positive electrode current collector. In addition, in the current collecting bundle portion 12 of the negative electrode uncoated portion, each of the bundled current collecting strip portions 13 is formed of the negative electrode current collector. In the electrode group 2, the current collecting bundle portion 12 of the positive electrode uncoated portion protrudes toward one side in the length direction, and the current collecting bundle portion 12 of the negative electrode uncoated portion protrudes toward an opposite side in the length direction to the side on which the positive electrode uncoated portion protrudes.

In the battery 1 of the example of FIG. 1, the electrode group 2 is housed in the internal cavity 10 in a state in which the thickness direction of the electrode group 2 extends along the depth direction of the battery 1, and the length direction of the electrode group 2 extends along the lateral direction of the battery 1. In addition, the electrode group 2 is disposed in the internal cavity 10 in a state in which the width direction of the electrode group 2 extends along the height direction of the battery 1. Since the electrode group 2 is disposed in the internal cavity 10 in this manner, in the battery 1 of the example of FIG. 1, the current collecting bundle portion 12 of the positive electrode uncoated portion protrudes toward one side in the lateral direction, and the current collecting bundle portion 12 of the negative electrode uncoated portion protrudes toward an opposite side in the lateral direction to the side on which the positive electrode uncoated portion protrudes.

In addition, in the battery 1 of the example of FIG. 1, a pair of terminals 15 are attached to the lid 6. Each of the paired terminals 15 is exposed to the outside of the battery 1, and is disposed on an outer surface of the lid 6. The terminals 15 are formed of an electrically conductive material such as a metal. One of the paired terminals 15 functions as a positive electrode terminal of the battery 1, and the other of the paired terminals 15, which is different from the positive electrode terminal, functions as a negative electrode terminal of the battery 1. Besides, in the example of FIG. 1, an insulating member 16 is disposed between each of the paired terminals 15 and the lid 16 on the outer surface of the lid 6. Each of the paired terminals 15 is electrically insulated from the container unit 3 including the outer container 5 and lid 6 by the insulating member 16.

Additionally, in the example of FIG. 1, a pair of leads 17 are housed in the inner cavity 10 of the container unit 3. Each of the leads 17 is formed of an electrically conductive material and has electrical conductivity. One of the paired leads 17 functions as a positive electrode-side lead, and the other of the paired leads 17, which is different from the positive electrode-side lead, functions as a negative electrode-side lead. In the battery 1, the positive electrode terminal is connected to the positive electrode-side lead, and the negative electrode terminal is connected to the negative electrode-side lead. In addition, in the battery 1, the current collecting bundle portion 12 of the positive electrode uncoated portion is joined (connected) to the positive electrode-side lead, and is electrically connected to the positive electrode terminal via the positive electrode-side lead. Besides, the current collecting bundle portion 12 of the negative electrode uncoated portion is joined (connected) to the negative electrode-side lead, and is electrically connected to the negative electrode terminal via the negative electrode-side lead. Accordingly, in each of the paired uncoated portions 11, the current collecting bundle portion 12 is joined (connected) to a corresponding one of the paired leads 17.

In the example of FIG. 1 and FIG. 2, in each of the paired uncoated portions 11, a clip (backup lead) 18 is attached to the current collecting bundle portion 12. Each of the clips 18 is formed of an electrically conductive material. In each of the uncoated portions 11, the current collecting bundle portion 12 is joined (connected) to a corresponding one of the paired leads 17 via a clip 18. Note that in the inner cavity 10 of the outer container 5, the paired uncoated portions 11, the paired leads 17 and the clips 18 are electrically insulated from the container unit 3 including the outer container 5 and lid 6 by at least one insulating member (not illustrated).

In the battery 1 of the example of FIG. 1, each of the paired leads 17 includes a top plate portion 21 and a leg plate portion 22, and one leg plate portion 22 is formed in each of the leads 17. In the inner cavity 10, the top plate portion 21 of each lead 17 is disposed between the lid 6 and the electrode group 2 in the height direction of the battery 1. In each of the leads 17, the leg plate portion 22 is connected to the top plate portion 21. In addition, in the inner cavity 10, in each of the leads 17, the leg plate portion 22 extends along the height direction of the battery 1 from a position of connection to the top plate portion 21 toward the side on which the bottom wall 7 is located.

In the battery 1, the leg plate portion 22 of the positive electrode-side lead is joined to the current collecting bundle portion 12 and clip 18 in a state in which the leg plate portion 22 is stacked on the current collecting bundle portion 12 of the positive electrode uncoated portion from one side in the thickness direction of the electrode group 2 (the depth direction of the battery 1). In addition, in the battery 1, the leg plate portion 22 of the negative electrode-side lead is joined to the current collecting bundle portion 12 and clip 18 in a state in which the leg plate portion 22 is stacked on the current collecting bundle portion 12 of the negative electrode uncoated portion from one side in the thickness direction of the electrode group 2. Thus, in each of the paired leads 17, the leg plate portion 22 functions as a joint plate portion that is joined to a corresponding one of the current collecting bundle portions 12. In addition, in each of the leads 17, the leg plate portion 22 functioning as the joint plate portion is joined (connected) to a corresponding one of the current collecting bundle portions 12, in a state in which the leg plate portion 22 is stacked on the corresponding one of the current collecting bundle portions 12 from one side in the thickness direction of the electrode group 2.

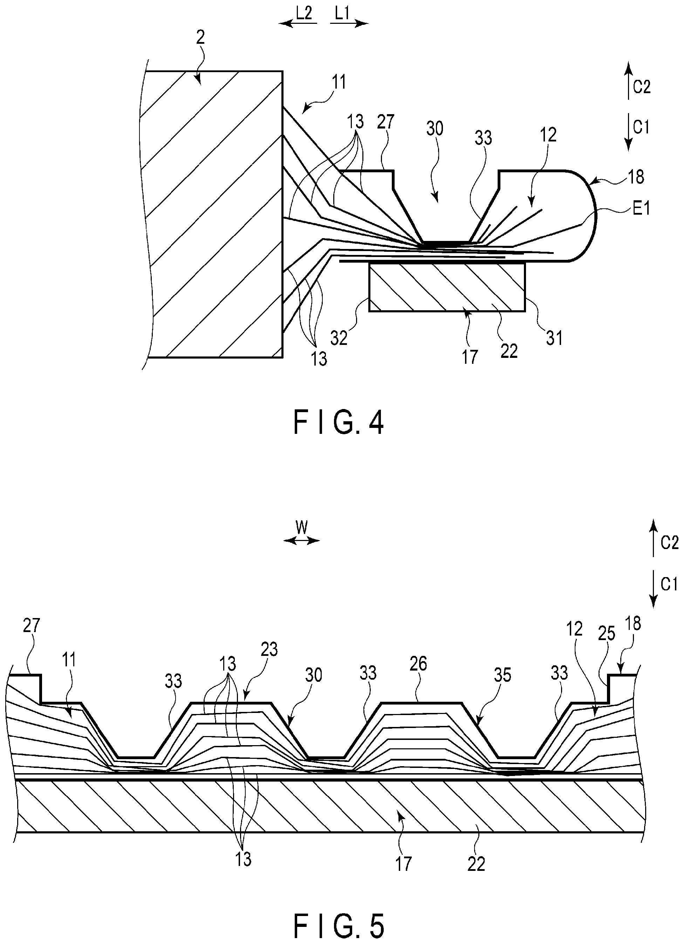

FIG. 3 to FIG. 5 schematically illustrate an example of a configuration of a joint part (connection part) of one current collecting bundle portion 12 of the electrode group 2 to the lead 17, and a vicinity thereof, in the battery 1 according to the first embodiment. FIG. 3 illustrates a state as viewed from one side in the thickness direction of the electrode group 2 (the depth direction of the battery 1 and the stacking direction of the current collecting strip portions 13), and illustrates a state as viewed from an opposite side in the thickness direction of the electrode group 2 to the side on which the lead 17 (leg plate portion 22) is stacked. FIG. 4 illustrates a cross section along an imaginary line A1 in FIG. 3 by a cross-sectional view, and illustrates a cross section perpendicular or substantially perpendicular to the width direction of the electrode group 2 (the height direction of the battery 1). In addition, FIG. 5 illustrates a cross section along an imaginary line A2 in FIG. 3 by a cross-sectional view, and illustrates a cross section perpendicular or substantially perpendicular to the length direction of the electrode group 2 (the protruding direction of the current collecting bundle portion 12 and the lateral direction of the battery 1).

Hereinafter, a configuration or the like of the joint part (connection part) of one current collecting bundle portion 12 to the lead 17 is described. In the battery 1, in each of the positive electrode uncoated portion and negative electrode uncoated portion, the configuration or the like of the joint part of the current collecting bundle portion 12 to the lead 17 is similar to the configuration or the like described below.

As illustrated in FIG. 3 to FIG. 5, and the like, in the joint part (connection part) where the current collecting bundle portion 12, lead 17 and clip 18 are joined, and the vicinity thereof, the clip 18 clamps the current collecting bundle portion 12 from both sides in the thickness direction of the electrode group 2 (the stacking direction of the current collecting strip portions 13). In addition, the clip 18 is attached to the current collecting bundle portion 12 in a state in which the clip 18 is close to a protruding end E1 of the current collecting bundle portion 12 from the side on which the current collecting bundle portion 12 protrudes (the outside of the electrode group 2 in the length direction). In a cross section perpendicular or substantially perpendicular to the width direction of the electrode group 2, the clip 18 has a U shape or a substantially U shape (see FIG. 2 and FIG. 4). The U shape or substantially U shape of the clip 18 is open toward the inside of the electrode group 2 in the length direction, that is, toward an opposite side to the side on which the current collecting bundle portion 12 protrudes (toward the arrow L2 side in FIG. 3 and FIG. 4).

In the example of FIG. 3 to FIG. 5, and the like, the leg plate portion 22 of the lead 17 is stacked on the current collecting bundle portion 12 and clip 18 from one side in the thickness direction of the electrode group 2 (the arrow C1 side in FIG. 4 and FIG. 5). In addition, the leg plate portion 22 of the lead 17 is joined (connected) to the current collecting bundle portion 12 and clip 18 in a state in which the leg plate portion 22 is stacked on the current collecting bundle portion 12 and clip 18. In the joint part and the vicinity thereof, the lead 17 abuts on the clip 18 from one side in the thickness direction of the electrode group 2. In addition, the leg plate portion 22 is joined to the current collecting bundle portion 12 in a state in which the plate width direction extends along the length direction of the electrode group 2 (the protruding direction of the current collecting bundle portion 12), and the plate thickness direction extends along the thickness direction of the electrode group 2 (the stacking direction of the current collecting strip portions 13).

In addition, a groove 23 is formed in the joint part of the lead 17 and current collecting bundle portion 12. The groove 23 includes a groove peripheral surface portion 25 and a groove bottom portion (groove bottom surface) 26. The groove 23 is recessed to the groove bottom portion 26 toward the lead 17, and is recessed toward the side (arrow C1 side) on which the lead 17 is located in the thickness direction of the electrode group 2. The groove 23 is open toward an opposite side to the side on which lead 17 is located in the thickness direction of the electrode group 2. An opening edge of the opening of the groove 23 is formed by the groove peripheral surface portion 25. A reference surface 27, which faces toward an opposite side to the side on which the lead is stacked in the thickness direction of the electrode group 2, is formed on an outer surface of the clip 18. In the example of FIG. 3 to FIG. 5, the groove 23 opens in the reference surface 27 of the clip 18. In addition, the groove 23 is recessed from the reference surface 27 toward the side on which the lead 17 is located, and a step is formed by the groove peripheral surface portion 25 between the reference surface 27 and the groove bottom portion 26.

In addition, the leg plate portion (joint plate portion) 22 of the lead 17 includes a pair of plate edges 31 and 32 that are both edges in the plate width direction. In the leg plate portion 22, the plate edge (first plate edge) 31 is an edge on one side in the plate width direction, and the plate edge (second plate edge) 32 is an edge on an opposite side to the plate edge 31 in the plate width direction. In the leg plate portion 22 joined to the current collecting bundle portion 12, the plate edge 31, compared to the plate edge 32, is located at a position closer to the protruding end E1 of the current collecting bundle portion 12. In other words, in the joint part and the vicinity thereof, the plate edge 31 is located on the side (the arrow L1 side in FIG. 3 and FIG. 4) on which the current collecting bundle portion 12 is protrudes, with respect to the plate edge 32.

In the joint part of the present embodiment, the entirety of the groove 23 including the groove bottom portion 26 is located on the opposite side (the inside in the longitudinal direction of the electrode group 2) to the side on which the current collecting bundle portion 12 protrudes, with respect to the plate edge 31 of the leg plate portion 22. Thus, in the joint part, the groove 23 (groove peripheral surface portion 25 and groove bottom portion 26) does not protrude (project), with respect to the lead 17, to the side on which the current collecting bundle portion 12 protrudes in the length direction of the electrode group 2.

In one preferable example of the present embodiment, in the joint part, the entirety of the groove 23 is located on the side on which the current collecting bundle portion 12 protrudes (the outside in the length direction of the electrode group 2), with respect to the plate edge 32 of the leg plate portion 22. In this case, in the joint part, the groove 23 does not protrude (project) to the opposite side, either, to the side on which the current collecting bundle portion 12 protrudes in the length direction of the electrode group 2, with respect to the lead 17. Thus, in the joint part, the entirety of the groove 23 falls within the range between the plate edges 31 and 32 of the leg plate portion 22 in the length direction of the electrode group 2.

In addition, in the present embodiment, in the joint part, at least one recess 33 is formed. Each of the recesses 33 is further recessed from the groove bottom portion 26 of the groove 23 toward the side on which the lead 17 is located in the thickness direction of the electrode group 2. Because of this configuration, the recess amount of each of the recesses 33 formed in the joint part is greater than the recess amount to the groove bottom portion 26 of the groove 23.

In one example, each of the recesses 33 does not reach the lead 17, and a bottom portion of each recess 33 is located at a position close to the reference surface 27, with respect to the lead 17. In another example, each of the recesses 33 is recessed from the groove bottom portion 26 to the lead 17. Each of the recesses 33 is formed, for example, in a polygonal pyramid shape, a polygonal truncated pyramid shape, a conical shape, a truncated conical shape, and a shape similar to one of these. In the joint part, a recess structure portion 30 that is recessed from the groove bottom portion 26 is formed of at least one recess 33.

In the example of FIG. 3 to FIG. 5, the recess structure portion 30 is formed of a plurality (three) of recesses 33. In addition, the recesses 33 are arranged in the width direction of the electrode group 2, and one recess string 35 is formed of the recesses 33. In the recess structure portion 30 (recess string 35) of the example of FIG. 3 to FIG. 5, the recesses 33 are not displaced, or not substantially displaced, from each other in the length direction of the electrode group 2. Thus, the recesses 33 that form the recess string 35 have equal or substantially equal separation distances from the protruding end E1 of the current collecting bundle portion 12 along the length direction of the electrode group 2. In addition, in the example of FIG. 3 to FIG. 5, in the recess structure portion 30, only one recess string 35 is formed. Thus, the recesses 33 that form the recess structure portion 30 have equal or substantially equal separation distances from the protruding end E1 of the current collecting bundle portion 12 along the length direction of the electrode group 2.

In one preferable example, the groove 23 (groove bottom portion 26) does not protrude to the side on which the current collecting bundle portion 12 protrudes (the outside in the length direction of the electrode group 2), with respect to each of the recesses 33 forming the recess string 35. In this case, the groove bottom portion 26 does not neighbor each of the recesses 33, from the side on which the current collecting bundle portion 12 protrudes. In addition, the groove 23 does not protrude to the side on which the current collecting bundle portion 12 protrudes, with respect to the recess string 35, and does not protrude to the side on which the current collecting bundle portion 12 protrudes, with respect to the recess structure portion 30 formed of the recesses 33. Note that in the recess structure portion 30, for example, a position through which an imaginary line α1 (see FIG. 3) passes is an end on the side on which the current collecting bundle portion 12 protrudes.

In addition, in a more preferable example, the groove 23 does not protrude to the side on which the current collecting bundle portion 12 protrudes, and does not protrude to an opposite side (the inside in the length direction of the electrode group 2) to the side on which the current collecting bundle portion 12 protrudes, with respect to each of the recesses 33 forming the recess string 35. In this case, the groove bottom portion 26 does not neighbor each of the recesses 33 from the side on which the current collecting bundle portion 12 protrudes, and from the opposite side to the side on which the current collecting bundle portion 12 protrudes. In addition, the groove 23 does not protrude to the side on which the current collecting bundle portion 12 protrudes, and to the opposite side to the side on which the current collecting bundle portion 12 protrudes, with respect to the recess string 35, and protrudes neither to one side nor to the other side in the length direction of the electrode group 2, with respect to the recess structure portion 30 formed of the recesses 33. Note that in the recess structure portion 30, for example, a position through which an imaginary line a2 (see FIG. 3) passes is an end on the opposite side to the side on which the current collecting bundle portion 12 protrudes.

Additionally, in the example of FIG. 3 to FIG. 5, in the recess string 35, each of the recesses 33 has an interval from a neighboring recess 33. In addition, in the joint part, the groove bottom portion 26 of the groove 23 extends between mutually neighboring recesses 33 in the width direction of the electrode group 2 in the recess string 35. Thus, in the example of FIG. 3 to FIG. 5, the recesses 33 constituting the recess structure portion 30 includes two recesses 33 that are spaced apart in the width direction of the electrode group 2. In addition, the groove bottom portion 26 of the groove 23 extends between the two recesses 33 that are spaced apart in the width direction.

Additionally, in the example of FIG. 3 to FIG. 5, in the joint part, the groove bottom portion 26 of the groove 23 neighbors the recess string 35 from the outside in the width direction of the electrode group 2, and neighbors the recess string 35 from both sides in the width direction of the electrode group 2. Thus, in the example of FIG. 3 to FIG. 5, the groove bottom portion 26 of the groove 23 neighbors the recess structure portion 30 formed of the recesses 33, from the outside in the width direction of the electrode group 2. In the example of FIG. 3 to FIG. 5, the groove bottom portion 26 neighbors each of the recesses 33 from both sides in the width direction of the electrode group 2. Besides, in the part in which the recess string 35 is formed, the groove bottom portions 26 and the recesses 33 are alternately arranged in the width direction of the electrode group 2 (the arrangement direction in the recess string 35).

As described above, in the example of FIG. 3 to FIG. 5, the groove bottom portion 26 of the groove 23 extends between the two recesses 33 that are spaced apart in the width direction of the electrode group 2, and neighbors the recess structure portion 30 composed of the recesses 33, from the outside in the width direction of the electrode group 2. Because of this configuration, the groove bottom portion 26 neighbors at least one of the recesses 33 constituting the recess structure portion 30, from the width direction of the electrode group 2.

In the manufacture of the battery 1 having the above configuration, after the electrode group 2 is formed, the current collecting bundle portion 12 is joined to a corresponding one of the paired leads 17 by ultrasonic welding or the like, in each of the paired uncoated portions 11 of the electrode group 2. At this time, in each of the uncoated portions 11, the lead 17 is stacked on the current collecting bundle portion 12 from one side in the thickness direction of the electrode group 2. Then, by joining the joining target portion in which the current collecting bundle portion 12 and the lead 17 are stacked, the current collecting bundle portion 12 is joined to the lead 17 in each of the uncoated portions 11. Furthermore, each of the paired uncoated portions 11 is electrically connected to a corresponding one of the paired terminals 15 via a corresponding one of the leads 17.

In one example, in a state in which a corresponding one of the paired terminals 15 is connected to each of the paired leads 17, each of the paired uncoated portions 11 is joined to the corresponding one of the leads 17. In another example, after each of the paired uncoated portions 11 is joined to the corresponding one of the paired leads 17, the corresponding one of the paired terminals 15 is connected to each of the leads 17.

In the manufacture of the battery 1 of the example of FIG. 1, in the state in which each of the paired uncoated portions 11 is electrically connected to the corresponding one of the paired terminals 15 via the corresponding one of the paired leads 17, the electrode group 2 and paired leads 17, and the like, are housed in the inner cavity 10 of the outer container 5. In addition, in the state in which the electrode group 2 and leads 17 are housed in the inner cavity 10, the lid 6 is attached to the peripheral wall 8 of the outer container 5, and the opening of the inner cavity 10 is closed by the lid 6. Further, the battery 1 is manufactured by performing a predetermined process including filling of an electrolytic solution into the inner cavity 10. Note that the joining of the current collecting bundle portion 12 to the lead 17 is performed by using a joining device.

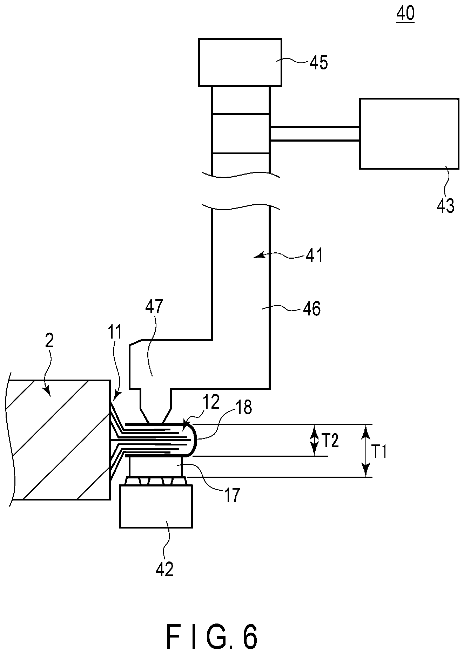

FIG. 6 schematically illustrates an example of a configuration of a joining device 40 used in the manufacture of the battery 1. In the present embodiment, for example, each of the current collecting bundle portions 12 of the electrode group 2 is joined to the corresponding one of the leads 17 by using the joining device 40. As illustrated in FIG. 6 and the like, the joining device 40 includes a joining jig 41, a stage 42 such as an anvil, a pressurizing unit 45 and an ultrasonic transducer 43. In a case of joining the joining target portion by using the joining device 40, the joining target portion is clamped between the joining jig 41 and the stage 42.

The pressurizing unit 45 applies pressure to the joining jig 41 in the state in which the joining target portion is clamped between the joining jig 41 and the stage 42. Thereby, the joining target portion, which is clamped between the joining jig 41 and the stage 42, is pressed by the joining jig 41. Note that in one example, the pressuring unit 45 applies pressure to the stage 42, instead of the joining jig 41. In this case, the joining target portion, which is clamped between the joining jig 41 and the stage 42, is pressed by the stage 42. In another example, the pressuring unit 45 applies pressure to both the joining jig 41 and the stage 42. In this case, the joining target portion, which is clamped between the joining jig 41 and the stage 42, is pressed by both the joining jig 41 and the stage 42.

The ultrasonic transducer 43 generates ultrasonic vibration by being supplied with AC power such as highfrequency power. Then, in the state in which the joining target portion is clamped between the joining jig 41 and the stage 42, the ultrasonic transducer 43 transmits the generated ultrasonic vibration to the joining target portion through the joining jig 41. Accordingly, in the joining device 40, in the state in which the joining target portion is clamped between the joining jig 41 and the stage 42, the joining target portion is joined by ultrasonic welding or the like, by applying pressure to at least one of the joining jig 41 and the stage 42 and by transmitting the ultrasonic vibration to the joining target portion.

The joining jig 41 includes a jig main body 46 and a joining tip portion 47. In the joining jig 41, the jig main body 46 extends from a proximal side to a distal side, and the joining tip portion 47 is connected to a distal portion of the jig main body 46. In the example of FIG. 6, the joining tip portion 47 bends with respect to the jig main bod 46. However, in one example, the joining tip portion 47 may not bend with respect to the jig main body 46, and may extend straight or substantially straight with respect to the jig main body 46.

In the joining of the joining target portion, the joining tip portion 47 is put in contact with the joining target portion, and the joining target portion is clamped between the joining tip portion 47 and the stage 42. In addition, in the configuration in which pressure is applied from the pressuring unit 45 to the joining jig 41, the joining tip portion 47 presses the joining target portion by the application of the pressure from the pressuring unit 45. Furthermore, the vibration generated by the ultrasonic transducer 43 is transmitted to the joining target portion, successively through the jig main body 46 and the joining tip portion 47.

Note that in the case of joining the current collecting bundle portion 12 to the lead 17, a thickness T1 is defined as the thickness of the entirety of the joining target portion in which the lead 17 is stacked on the current collecting bundle portion 12, and a thickness T2 is defined as the thickness of the portion excluding the lead 17 in the joining target portion (see FIG. 6). Here, the thickness T1 corresponds to a dimension (total thickness) of the entirety of the joining target portion along the thickness direction of the electrode group 2, and the thickness T2 corresponds to a dimension of the portion excluding the lead 17 in the joining target portion along the thickness direction of the electrode group 2. In the case of forming the battery 1 of the example of FIG. 1, the thickness T2 corresponds to the thickness of the portion formed of the current collecting bundle portion 12 and clip 18 in the joining target portion.

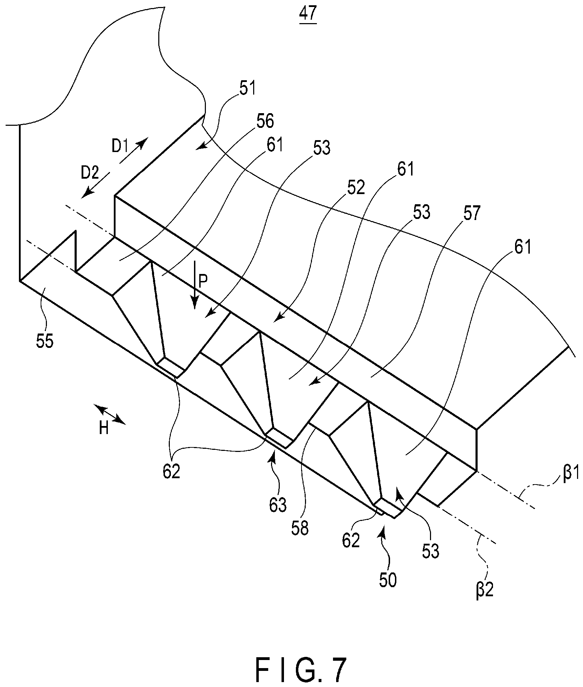

FIG. 7 schematically illustrates, by a perspective view, an example of a configuration of the joining tip portion 47 of the joining jig 41 according to the first embodiment. As illustrated in FIG. 7 and the like, the joining tip portion 47 includes a base portion 51, and a protruding stand portion 52 protruding from the base portion 51. In addition, in the joining tip portion 47 of the joining jig 41, a protruding direction (a direction indicated by arrow P) of the protruding stand portion 52 is defined. In the example of FIG. 7, a base surface 55 is formed on the base portion 51, and the protruding stand portion 52 protrudes from the base surface 55 in the protruding direction. Besides, in the joining tip portion 47, a width direction (a direction indicated by arrow H) of the protruding stand portion 52 crossing (perpendicular or substantially perpendicular to) the protruding direction of the protruding stand portion 52, and a depth direction (a direction indicated by arrow D1 and arrow D2) of the protruding stand portion 52 crossing (perpendicular or substantially perpendicular to) both the protruding direction and the width direction, are defined.

The protruding stand portion 52 includes a stand seat portion (stand seat surface) 56, and a pair of stand side portions (stand side surfaces) 57 ad 58. The stand seat portion 56 faces toward the protruding direction, and, in the protruding stand portion 52, a protruding end (protruding end face) of the protruding portion from the base surface 55 of the base portion 51 is formed by the stand seat portion 56. Each of the stand side portions 57 and 58 extends toward the protruding direction from the base portion 51 to the stand seat portion 56, and forms a part of an outer peripheral surface of the protruding stand portion 52. In addition, each of the stand side portions 57 and 58 extends from a bottom of protrusion to a protruding end of the protruding stand portion 52. Note that the outer peripheral surface of the protruding stand portion 52 extends from the base surface 55 to the stand seat portion 56 in the protruding direction of the protruding stand portion 52.

The stand side portion (first stand side portion) 57 faces one side (arrow D1 side) in the depth direction of the protruding stand portion 52, and, in the protruding stand portion 52, an end on one side in the depth direction is formed by the stand side portion 57. In addition, the stand side portion (second stand side portion) 58 faces an opposite side (arrow D2 side) to the side toward which the stand side portion 57 faces in the depth direction of the protruding stand portion 52, and, in the protruding stand portion 52, an end on the opposite side to the stand side portion 57 in the depth direction is formed by the stand side portion 58.

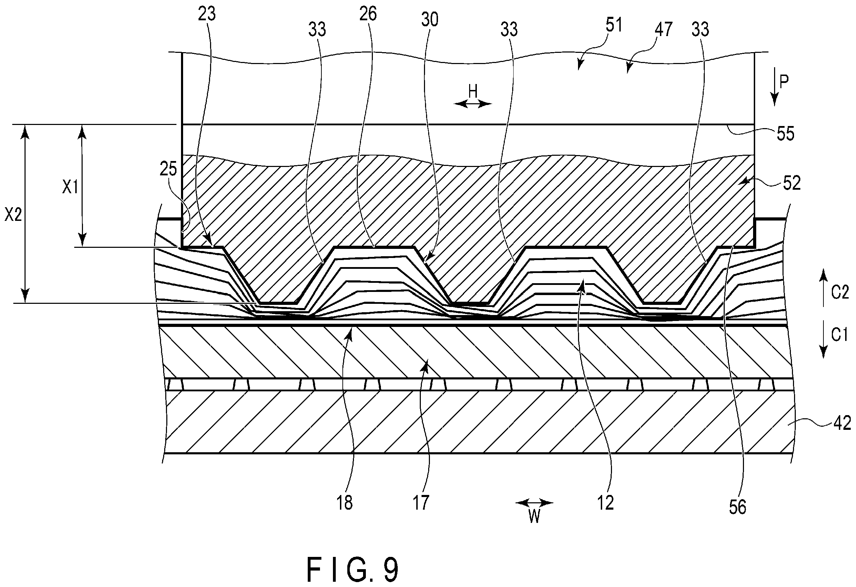

In the present embodiment, the joining tip portion 47 is provided with at least one protrusion 53. Each of the protrusions 53 further protrudes from the stand seat portion 56 toward the protruding direction of the protruding stand portion 52. Accordingly, each of the protrusions 53 further protrudes from the protruding end of the protruding stand portion 52. Here, a protrusion length X1 of the protruding stand portion 52 along the protruding direction from the base portion 51 (base surface 55) to the stand seat portion 56, and a protrusion length X2 along the protruding direction from the base portion 51 (base surface 55) to the protruding end of at least one protrusion 53, are defined (see FIG. 9 to be described later). In the joining tip portion 47, the protrusion length X2 is greater than the protrusion length X1. Each of the protrusions 53 is formed, for example, in a polygonal pyramid shape, a polygonal truncated pyramid shape, a conical shape, a truncated conical shape, and a shape similar to one of these. In the joining tip portion 47, a protrusion structure portion 50 protruding from the stand seat portion 56 is formed of at least one protrusion 53.

Each of at least one protrusion 53 includes a pair of protrusion side portions (protrusion side surfaces) 61 and 62. In each of the at least one protrusion 53, each of the protrusion side portions 61 and 62 extends from the stand seat portion 56 of the protruding stand portion 52 toward the protruding direction, and extends from the bottom of protrusion to the protruding end of the protrusion 53. Besides, in each of the at least one protrusion 53, each of the protrusion side portions 61 and 62 forms a part of an outer peripheral surface of the protrusion 53. Note that in each of the protrusions 53, the outer peripheral surface extends from the stand seat portion 56 to the protruding end of the protrusion 53 in the protruding direction of the protruding stand portion 52.

In each of the protrusions 53, the protrusion side portion (first protrusion side portion) 61 faces the side (arrow D1 side) toward which the stand side portion (first stand side portion) 57 faces in the depth direction, and the protrusion side portion (second protrusion side portion) 62 faces the side (arrow D2 side) toward which the stand side portion (second stand side portion) 58 faces in the depth direction. Besides, in each of the protrusions 53, an end on one side in the depth direction is formed by the protrusion side portion 61, and an end on the opposite side to the protrusion side portion 61 in the depth direction is formed by the protrusion side portion 62.

In the example of FIG. 7, the protrusion structure portion 50 is composed of a plurality (three) of protrusions 53. In addition, the protrusions 53 are arranged along the width direction of the protruding stand portion 52, and one protrusion string 63 is formed by the protrusions 53. In the protrusion structure portion 50 (protrusion string 63) of the example of FIG. 7, the protrusions 53 are not displaced, or not substantially displaced, from each other in the depth direction of the protruding stand portion 52. Thus, the protrusions 53 that form the protrusion string 63 have equal or substantially equal separation distances from the stand side portion 57 along the depth direction of the protruding stand portion 52. In addition, the protrusions 53 that form the protrusion string 63 have equal or substantially equal separation distances from the stand side portion 58 along the depth direction of the protruding stand portion 52.

In addition, in the example of FIG. 7, in the protrusion structure portion 50, only one protrusion string 63 is formed. Thus, the protrusions 53 that form the protrusion structure portion 50 have equal or substantially equal separation distances from the stand side portion 57 along the depth direction of the protruding stand portion 52. Further, the protrusions 53 that form the protrusion structure portion 50 have equal or substantially equal separation distances from the stand side portion 58 along the depth direction of the protruding stand portion 52.

In one example of the present embodiment, the stand seat portion 56 does not protrude to the side on which the stand side portion (first stand side portion) 57 faces, with respect to each of the protrusions 53 forming the protrusion string 63. In this case, the protrusion side portion 61 of each of the protrusions 53 is connected to the stand side portion 57 of the protruding stand portion 52 without the stand seat portion 56 being interposed. In addition, the stand seat portion 56 does not protrude to the side on which the stand side portion 57 faces, with respect to the protrusion string 63, and does not protrude to the side on which the stand side portion 57 faces, with respect to the protrusion structure portion 50 composed of the protrusions 53. Note that in the protrusion structure portion 50, for example, a position through which an imaginary line β1 (see FIG. 7) passes becomes an end on the side on which the stand side portion 57 faces.

In addition, in one preferable example, the stand seat portion 56 does not protrude to the side on which the stand side portion 57 faces, and does not protrude to the side on which the stand side portion (second stand side portion) 58 faces, with respect to each of the protrusions 53 forming the protrusion string 63. In this case, in each of the protrusions 53, the protrusion side portion 61 is connected to the stand side portion 57 of the protruding stand portion 52 without the stand seat portion 56 being interposed, and the protrusion side portion 62 is connected to the stand side portion 58 of the protruding stand portion 52 without the stand seat portion 56 being interposed. Besides, the stand seat portion 56 protrudes neither to the side on which the stand side portion 57 faces, nor to the side on which the stand side portion 58 faces, with respect to the protrusion string 63, and protrudes neither to one side nor to the other side in the depth direction of the protruding stand portion 52, with respect to the protrusion structure portion 50 composed of the protrusions 53. Note that in the protrusion structure portion 50, for example, a position through which an imaginary line β2 (see FIG. 7) passes becomes an end on the side on which the stand side portion 58 faces.

Additionally, in the example of FIG. 7, in the protrusion string 63, each of the protrusions 53 has an interval from a neighboring protrusion 53. In addition, in the joining tip portion 47, the stand seat portion 56 extends between mutually neighboring protrusions 53 in the width direction of the protruding stand portion 52 in the protrusion string 63. Thus, in the example of FIG. 7, the protrusions 53 constituting the protrusion structure portion 50 includes two protrusions 53 that are spaced apart in the width direction of the protruding stand portion 52. In addition, the stand seat portion 56 extends between the two protrusions 53 spaced apart in the width direction.

Additionally, in the example of FIG. 7, in the joining tip portion 47, the stand seat portion 56 neighbors the protrusion string 63 from an outside in the width direction of the protruding stand portion 52, and neighbors the protrusion string 63 from both sides in the width direction of the protruding stand portion 52. Thus, in the example of FIG. 7, the stand seat portion 56 neighbors the protrusion structure portion 50 composed of the protrusions 53, from the outside in the width direction of the protruding stand portion 52. In the example of FIG. 7, the stand seat portion 56 neighbors each of the protrusions 53 from both sides in the width direction of the protruding stand portion 52. Further, in the part in which the protrusion string 63 is formed, the stand seat portions 56 and the protrusions 53 are alternately arranged along the width direction of the protruding stand portion 52 (the arrangement direction in the protrusion string 63).

As described above, in the example of FIG. 7, the stand seat portion 56 extends between the two protrusions 53 that are spaced apart in the width direction of the protruding stand portion 52, and neighbors the protrusion structure portion 50 composed of the protrusions 53, from the outside in the width direction of the protruding stand portion 52. Because of this configuration, the stand seat portion 56 neighbors at least one of the protrusions 53 constituting the protrusion structure portion 50, from the width direction of the protruding stand portion 52.

In the joining of the current collecting bundle portion 12 to the lead 17, the joining target portion, in which the current collecting bundle portion 12 and the lead 17 are stacked, is clamped between the joining tip portion 47 of the joining jig 41 and the stage 42. At this time, as illustrated in FIG. 6 and the like, the joining tip portion 47 comes in contact with the joining target portion from the opposite side to the side on which the lead 17 is stacked in the thickness direction of the electrode group 2. In addition, the stage 42 comes in contact with the joining target portion from the side on which the lead 17 is stacked in the thickness direction of the electrode group 2.

Additionally, in the state in which the joining target portion is clamped between the joining jig 41 and the stage 42, the pressuring unit 45 applies pressure to at least one of the joining jig 41 and the stage 42, and at least one of the joining jig 41 and the stage 42 presses the joining target portion. Furthermore, in the state in which the joining target portion is clamped between the joining jig 41 and the stage 42, ultrasonic vibration is transmitted to the joining target portion through the joining jig 41. Thereby, the joining of the joining target portion is performed, and the joint part in which the current collecting bundle portion 12 and the lead 17 are joined is formed.

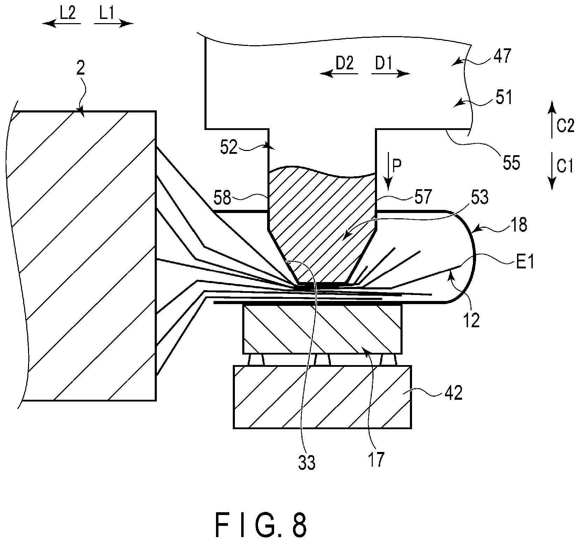

FIG. 8 and FIG. 9 schematically illustrate an example of a state in which one current collecting bundle portion 12 of the electrode group 2 is joined to the lead 17 in the first embodiment. FIG. 8 illustrates a cross section perpendicular or substantially perpendicular to the width direction of the electrode group 2, and FIG. 9 illustrates a cross section perpendicular or substantially perpendicular to the length direction of the electrode group 2 (the protruding direction of the current collecting bundle portion 12). In addition, FIG. 8 illustrates a part of the joining tip portion 47 by a cross section perpendicular to substantially perpendicular to the width direction of the protruding stand portion 52, and illustrates the other part in a state as viewed from one side in the width direction of the protruding stand portion 52. In addition, FIG. 9 illustrates a part of the joining tip portion 47 by a cross section perpendicular to substantially perpendicular to the depth direction of the protruding stand portion 52, and illustrates the other part in a state as viewed from one side in the depth direction of the protruding stand portion 52. Besides, FIG. 9 illustrates the protrusion length X1 of the protruding stand portion 52 from the base portion 51, and the protrusion length X2 of at least one protrusion 53 from the base portion 51, in regard to the joining tip portion 47.

Hereinafter, the joining of one current collecting bundle portion 12 to the lead 17 is described. In the manufacture of the battery 1, in each of the positive electrode uncoated portion and the negative electrode uncoated portion, the joining of the current collecting bundle portion 12 to the lead 17 is performed in a similar manner to aspects or the like to be described below.

As illustrated in FIG. 8 and FIG. 9, and the like, in the joining of the current collecting bundle portion 12 to the lead 17, the joining tip portion 47 is put in contact with the joining target portion in a state in which the protruding stand portion 52 and at least one protrusion 53 protrude toward the joining target portion. Thus, in the state in which the joining of the joining target portion is being performed, the protruding direction of the protruding stand portion 52 extends along the thickness direction of the electrode group 2, and the protruding stand portion 52 protrudes from the base portion 51 toward the side (arrow C1 side) on which the lead 17 is located. In addition, in the joining of the current collecting bundle portion 12 to the lead 17, the joining tip portion 47 is put in contact with the joining target portion in a state in which the width direction (direction indicated by arrow H) of the protruding stand portion 52 extends along the width direction of the electrode group (direction indicated by arrow W), and the depth direction of the protruding stand portion 52 (direction indicated by arrow D1 and arrow D2) extends along the length direction of the electrode group (direction indicated by arrow L1 and arrow L2). Besides, the joining tip portion 47 is put in contact with the joining target portion in a state in which the stand side portion (first stand side portion) 57 of the protruding stand portion 52 faces the side (arrow L1 side) on which the current collecting bundle portion 12 protrudes.

In the joining of the current collecting bundle portion 12 to the lead 17, by applying pressure to at least one of the joining jig 41 and the stage 42, the stand seat portion 56 and at least one protrusion 53 of the joining tip portion 47 are put in contact with the joining target portion. In addition, the joining target portion is joined by ultrasonic welding by transmitting ultrasonic vibration to the joining target portion through the joining tip portion 47 in the state in which the stand seat portion 56 and at least one protrusion 53 of the joining tip portion 47 are put in contact with the joining target portion. By joining the current collecting bundle portion 12 to the lead 17 as described above, in the joint part of the lead 17 and current collecting bundle portion 12, the groove bottom portion 26 of the groove 23 is formed in the part with which the stand seat portion 56 is put in contact, and the recess 33 is formed in each of the parts with which at least one protrusion 53 is put in contact.

In the present embodiment, the stand seat portion 56 and at least one protrusion 53 are put in contact with the joining target portion in the state in which the stand seat portion 56 does not protrude, with respect to the lead 17, to the side on which the current collecting bundle portion 12 protrudes in the length direction of the electrode group 2. Thereby, in the joint part of the lead 17 and current collecting bundle portion 12, the groove 23 is formed in the state in which the groove 23 does not protrude, with respect to the lead 17, to the side on which the current collecting bundle portion 12 protrudes in the length direction of the electrode group 2.

Additionally, in one preferable example, the stand seat portion 56 and at least one protrusion 53 are put in contact with the joining target portion in the state in which the stand seat portion 56 does not protrude, with respect to the lead 17; to the opposite side, either, to the side on which the current collecting bundle portion 12 protrudes in the length direction of the electrode group 2. In this case, in the joint part of the lead 17 and the current collecting bundle portion 12, the groove 23 is formed in the state in which the groove 23 protrudes, with respect to the lead 17, neither to the side on which the current collecting bundle portion 12 protrudes, nor to the opposite side to the side on which the current collecting bundle portion 12 protrudes.

In one example, the joining target portion is joined, as described above, by using the joining tip portion 47 of the example of FIG. 7. Thereby, the same grooves 23 and recess structure portion 30 as in the example of FIG. 3 to FIG. 5 are formed in the joint part of the current collecting bundle portion 12 and the lead 17. In the present embodiment, in the joining jig 41 used for the joining, the stand seat portion 56 neighbors at least one of the at least one protrusion 53 from the width direction of the protruding stand portion 52. Thus, in the joint part of the current collecting bundle portion 12 and the lead 17, the groove bottom portion 26 of the groove 23 neighbors at least one of the at least one recess 33 from the width direction of the electrode group 2.

Additionally, in one example, in the joining jig 41 used for the joining of the joining target portion, the stand seat portion 56 does not protrude to the side on which the stand side portion (first stand side portion) 57 faces, with respect to the protrusion structure portion 50. In the present example, in the joint part of the current collecting bundle portion 12 and the lead 17, the groove 23 can be formed in the state in which the groove 23 does not protrude, with respect to the recess structure portion 30, to the side on which the current collecting bundle portion 12 protrudes in the length direction of the electrode group 2. In addition, in another example, in the joining jig 41 used for the joining, the stand seat portion 56 protrudes neither to the side on which the stand side portion (first stand side portion) 57 faces, nor to the side on which the stand side portion (second stand side portion) 58 faces, with respect to the protrusion structure portion 50. In the present example, in the joint part of the current collecting bundle portion 12 and the lead 17, the groove 23 can be formed in the state in which the groove 23 protrudes, with respect to the recess structure portion 30, neither to the side on which the current collecting bundle portion 12 protrudes, nor to the opposite side to the side on which the current collecting bundle portion 12 protrudes.

In one example, in the joining, each of the at least one recess 33 is formed with such a recess amount as not to reach the lead 17. In this case, the joining jig 41, in which the protrusion length X2 of at least one protrusion 53 from the base portion 51 is greater than the thickness T2 of the portion excluding the lead 17 in the joining target portion, is used for the joining. Thereby, in the joining of the joining target portion, the base portion 51 (base surface 55) of the joining tip portion 47 is prevented from coming in contact with the joining target portion.

Note that in each of the at least one recess 33, in each of the case where the recess amount does not reach the lead 17 and the case where the recess amount reaches the lead 17, use is made of the joining jig 41 in which the protrusion length X2 of at least one protrusion 53 from the base portion 51 is greater than the recess amount of the recess 33. Thereby, in the joining of the joining target portion, the base portion 51 (base surface 55) of the joining tip portion 47 is prevented from coming in contact with the joining target portion.

As described above, in the present embodiment, in the joining of the joining target portion, use is made of the joining jig 41 in which the stand seat portion 56 forms the protruding end of the protruding stand portion 52 that protrudes from the base portion 51, and each of at least one protrusion 53 further protrudes from the stand seat portion 56 toward the protruding direction of the protruding stand portion 52. In addition, in the joining of the joining target portion, the stand seat portion 56 and at least one protrusion 53 of the joining jig 41 are put in contact with the joining target portion, from the opposite side to the side on which the lead 17 is stacked in the thickness direction of the electrode group 2. In the state in which the stand seat portion 56, in addition to the at least one protrusion 53, is put in contact with the joining target portion, the current collecting bundle portion 12 is joined to the lead 17, and thereby the strength of joining in the joint part is improved.

Additionally, in the present embodiment, in the state in which the stand seat portion 56 does not protrude, with respect to the lead 17, to the side on which the current collecting bundle portion 12 protrudes in the length direction of the electrode group 2, the stand seat portion 56 and at least one protrusion 53 are put in contact with the joining target portion. Thereby, in the joining, the part in which the stand seat portion 56 comes in contact with the joining target portion is distant by some degree toward the inside in the length direction of the electrode group 2, with respect to the protruding end E1 of the current collecting bundle portion 12. As described above, by the stand seat portion 56 coming in contact with the joining target portion, it is possible to effectively prevent the joint part from excessively expanding, due to the joining, to the side on which the current collecting bundle portion 12 protrudes. In other words, improper deformation of the joint part including the current collecting bundle portion 12 due to the joining can appropriately be suppressed. Accordingly, in the joining of the current collecting bundle portion 12 of the electrode group 2 to the lead 17, the improper deformation of the joint part due to the joining can appropriately be suppressed, while the strength of joining in the joint part is improved.

For example, since the excessive expansion of the joint part to the side on which the current collecting bundle portion 12 protrudes is suppressed, the joint part of the current collecting bundle portion 12 and lead 17 interferes less easily with the outer container 5 in accommodating the electrode group 2 and lead 17, and the like, into the inner cavity 10 of the outer container 5. Thereby, in accommodating the electrode group 2 and lead 17, and the like, into the inner cavity 10 of the outer container 5, an assembly in which the electrode group 2 and lead 17, and the like, are assembled can easily be inserted into the inner cavity 10. Accordingly, in the manufacture of the battery 1, the work efficiency in the work of housing the electrode group 2 and lead 17 into the inner cavity 10 is improved.

Additionally, in one preferable example of the present embodiment, the joining jig 41 or the like, in which the stand seat portion 56 does not protrude, with respect to the protrusion structure portion 50, to the side on which the stand side portion 57 faces, is used for the joining, and, in the joint part, the groove 23 is formed in such a state that the groove 23 does not protrude, with respect to the recess structure portion 30, to the side on which the current collecting bundle portion 12 protrudes. Thereby, it is possible to more effectively prevent the joint part from excessively expanding, due to the joining, to the side on which the current collecting bundle portion 12 protrudes. Therefore, the improper deformation of the joint part due to the joining can more appropriately be suppressed.

Additionally, in one preferable example of the present embodiment, the stand seat portion 56 and at least one protrusion 53 are put in contact with the joining target portion in the state in which the stand seat portion 56 does not protrude, with respect to the lead 17, to the opposite side, either, to the side on which the current collecting bundle portion 12 protrudes in the length direction of the electrode group 2. Thereby, the improper deformation of the joint part due to the joining can more appropriately be suppressed.

Additionally, in a more preferable example of the present embodiment, in the joining, use is made of the joining jig 41 or the like, in which the stand seat portion 56 protrudes, with respect to the protrusion structure portion 50, neither to the side on which the stand side portion 57 faces, nor to the side on which the stand side portion 58 faces. In addition, in the joint part, for example, the groove 23 is formed in the state in which the groove 23 protrudes, with respect to the recess structure portion 30, neither to the side on which the current collecting bundle portion 12 protrudes, nor to the opposite side to the side on which the current collecting bundle portion 12 protrudes. Thereby, the improper deformation of the joint part due to the joining can more appropriately be suppressed.

Additionally, in one example of the present embodiment, in the joining, use is made of the joining jig 41 in which the stand seat portion 56 neighbors at least one of the protrusions 53 from the width direction of the protruding stand portion 52. In addition, in the joint part of the current collecting bundle portion 12 and lead 17, the groove bottom portion 26 of the groove 23 neighbors at least one of the at least one recess 33 from the width direction of the electrode group 2. By configuring the joining jig 41 in this manner, the stand seat portion 56 can be formed in the joining jig 41 without the stand seat portion 56 protruding, with respect to the protrusion structure portion 50, either to one side or to the other side in the depth direction of the protruding stand portion 52. Thereby, in the joint part, the groove 23 (groove bottom portion 26) can be formed without the groove 23 protruding, with respect to the recess structure portion 30, either to one side or to the other side in the length direction of the electrode group 2.

### (Modifications)

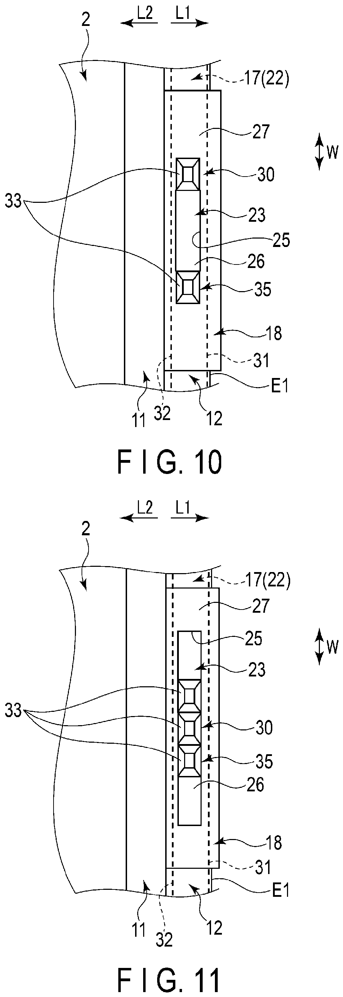

Also in each of a first modification illustrated in FIG. 10 and a second modification illustrated in FIG. 11, the groove 23 and at least one recess 33 are formed in the joint part of the current collecting bundle portion 12 and lead 17. In addition, the groove 23 does not protrude, with respect to the lead 17, to the side on which the current collecting bundle portion 12 protrudes in the length direction of the electrode group 2. Here, FIG. 10 and FIG. 11 schematically illustrate an example of a configuration of a joint part (connection part) of one current collecting bundle portion 12 of the electrode group 2 to the lead 17, and a vicinity thereof. In addition, FIG. 10 and FIG. 11 illustrate a state as viewed from one side in the thickness direction of the electrode group 2 (the depth direction of the battery 1 and the stacking direction of the current collecting strip portions 13), and illustrates a state as viewed from an opposite side to the side on which the lead 17 (leg plate portion 22) is stacked in the thickness direction of the electrode group 2.

In regard to the first modification and second modification, too, in one preferable example, the groove 23 does not protrude, with respect to the lead 17, to the opposite side, either, to the side on which the current collecting bundle portion 12 protrudes in the length direction of the electrode group 2. Besides, also in the first modification and second modification, the recess structure portion 30 is composed of a plurality of recesses 33. In addition, in the recess structure portion 30, a recess string 35 in which the recesses 33 are arranged in the width direction of the electrode group 2 is formed, and only one recess string 35 is formed. Further, like the first embodiment and the like, in the recess structure portion 30 (recess string 35), the recesses 33 are not displaced, or not substantially displaced, from each other in the length direction of the electrode group 2.

Also in the first modification and second modification, in one preferable example, the groove 23 (groove bottom portion 26) does not protrude to the side on which the current collecting bundle portion 12 protrudes (the outside in the length direction of the electrode group 2), with respect to each of the recesses 33 forming the recess structure portion 30 (recess string 35), and does not protrude to the side on which the current collecting bundle portion 12 protrudes, with respect to the recess structure portion 30. Furthermore, as regards these modifications, too, in a more preferable example, the groove 23 does not protrude to the side on which the current collecting bundle portion 12 protrudes, with respect to each of the recesses 33 forming the recess structure portion 30 (recess string 35), and does not protrude to the opposite side (the inside in the length direction of the electrode group 2) to the side on which the current collecting bundle portion 12 protrudes. In this case, the groove 23 protrudes neither to one side nor to the other side in the length direction of the electrode group 2, with respect to the recess structure portion 30.

As illustrated in FIG. 10 and the like, in the first modification, too, the groove bottom portion 26 of the groove 23 extends between mutually neighboring recesses 33 in the width direction of the electrode group 2 in the recess string 35. Thus, the groove bottom portion 26 of the groove 23 extends between the two recesses 33 that are spaced apart in the width direction. However, in the first modification, the groove bottom portion 26 is not formed in an outside area with respect to the recess string 35 in the width direction of the electrode group 2. In other words, the groove bottom portion 26 (groove 23) is not formed in an outside area with respect to the recess string 35 in the width direction of the electrode group 2. However, in the present modification, too, as described above, the groove bottom portion 26 of the groove 23 extends between the two recesses 33 that are spaced apart in the width direction of the electrode group 2. Because of this configuration, in the present modification, too, the groove bottom portion 26 neighbors at least one of the recesses 33 constituting the recess structure portion 30, from the width direction of the electrode group 2.

As illustrated in FIG. 11 and the like, in the second modification, in the recess string 35, a plurality of recesses 33 are successively arranged in the width direction of the electrode group 2. Thus, in the recess string 35, the groove bottom portion 26 is not formed between mutually neighboring recesses 33 in the width direction of the electrode group 2. However, in the present modification, like the first embodiment and the like, the groove bottom portion 26 of the groove 23 neighbors the recess string 35 from the outside in the width direction of the electrode group 2, and neighbors the recess structure portion 30 formed of the recesses 33, from the outside in the width direction of the electrode group 2. Because of this configuration, in the present modification, too, the groove bottom portion 26 neighbors at least one of the recesses 33 constituting the recess structure portion 30, from the width direction of the electrode group 2.

Also in the first modification and the second modification, in the joining of the current collecting bundle portion 12 to the lead 17, use is made of the joining jig 41 in which the stand seat portion 56 forms the protruding end of the protruding stand portion 52 that protrudes from the base portion 51, and each of the at least one protrusion 53 further protrudes from the stand seat portion 56 toward the protruding direction of the protruding stand portion 52. In addition, the joining is performed in the same manner as in the first embodiment and the like. In these modifications, too, in the joining, the stand seat portion 56 and at least one protrusion 53 are put in contact with the joining target portion in the state in which the stand seat portion 56 does not protrude, with respect to the lead 17, to the side on which the current collecting bundle portion 12 protrudes in the length direction of the electrode group 2. Besides, in the joint part of the lead 17 and current collecting bundle portion 12, the groove bottom portion 26 of the groove 23 is formed in the part with which the stand seat portion 56 is put in contact, and the recess 33 is formed in each of the parts with which at least one protrusion 53 is put in contact.

Also in the joining jig 41 used in the first modification and second modification, the stand seat portion 56 neighbors at least one of the protrusions 53 constituting the protrusion structure portion 50, from the width direction of the protruding stand portion 52. In addition, like the first embodiment and the like, in the protrusion structure portion 50 of the joining jig 41, a protrusion string 63 in which the protrusions 53 are arranged in the width direction of the protruding stand portion 52 is formed, and only one protrusion string 63 is formed. Further, like the first embodiment and the like, in the protrusion structure portion 50 (protrusion string 63), the protrusions 53 are not displaced, or not substantially displaced, from each other in the depth direction of the protruding stand portion 52.

In regard to the joining jig 41 of the first modification and second modification, too, in one preferable example, the stand seat portion 56 does not protrude to the side on which the stand side portion (first stand side portion) 57 faces, with respect to each of the protrusions 53 forming the protrusion structure portion 50 (protrusion string 63), and does not protrude to the side on which the stand side portion 57 faces, with respect to the protrusion structure portion 50. In addition, in regard to the joining jig 41 of these modifications, in a more preferable example, the stand seat portion 56 protrudes neither to the side on which the stand side portion 57 faces, nor to the side on which the stand side portion (second stand side portion) 58 faces, with respect to each of the protrusions 53 forming the protrusion structure portion 50 (protrusion string 63). In this case, the stand seat portion 56 protrudes neither to one side nor to the other side in the depth direction of the protruding stand portion 52, with respect to the protrusion structure portion 50.

In one modification, in the joint part of the current collecting bundle portion 12 and the lead 17, the recess structure portion 30 is composed of only one recess 33. In the present modification, too, the groove 23 does not protrude to the side on which the current collecting bundle portion 12 protrudes in the length direction of the electrode group 2, with respect to the lead 17. Also in the present modification, in one preferable example, the groove 23 does not protrude to the opposite side, either, to the side on which the current collecting bundle portion 12 protrudes in the length direction of the electrode group 2, with respect to the lead 17.

Additionally, in the present modification, in one preferable example, the groove 23 (groove bottom portion 26) does not protrude to the side on which the current collecting bundle portion 12 protrudes (the outside in the length direction of the electrode group 2), with respect to the recess 33 forming the recess structure portion 30. By this configuration, the groove 23 does not protrude to the side on which the current collecting bundle portion 12 protrudes, with respect to the recess structure portion 30. In addition, in regard to the present modification, in a more preferable example, the groove 23 does not protrude to the side on which the current collecting bundle portion 12 protrudes, with respect to the recess 33 forming the recess structure portion 30, and does not protrude the opposite side (the inside in the length direction of the electrode group 2) to the side on which the current collecting bundle portion 12 protrudes. By this configuration, the groove 23 protrudes neither to one side nor to the other side in the length direction of the electrode group 2, with respect to the recess structure portion 30.

In the present modification, the groove bottom portion 26 neighbors the recess 33, which is only one recess 33, from the width direction of the electrode group 2. In one example, the groove bottom portion 26 neighbors the recess 33 from only one side in the width direction, and, in another example, the groove bottom portion 26 neighbors the recess 33 from both sides in the width direction. By this configuration, in the present modification, too, the groove bottom portion 26 neighbors at least one recess 33 constituting the recess structure portion 30, from the width direction of the electrode group 2.

In the present modification, like the above-described embodiment and the like, the current collecting bundle portion 12 is joined to the lead 17, except for the use of the joining jig 41 in which only one protrusion 53 protrudes from the stand seat portion 56. Also in the present modification, in the joining, the stand seat portion 56 and protrusion 53 are put in contact with the joining target portion in the state in which the stand seat portion 56 does not protrude, with respect to the lead 17, to the side on which the current collecting bundle portion 12 protrudes in the length direction of the electrode group 2. Besides, in the joint part of the lead 17 and current collecting bundle portion 12, the groove bottom portion 26 of the groove 23 is formed in the part with which the stand seat portion 56 is put in contact, and the recess 33 is formed in the part with which the protrusion 53 is put in contact.

In the joining jig 41 used in the present modification, the stand seat portion 56 neighbors the protrusion 53 constituting the protrusion structure portion 50, from the width direction of the protruding stand portion 52. In one example, the stand seat portion 56 neighbors the protrusion 53 from only one side in the width direction, and, in another example, the stand seat portion 56 neighbors the protrusion 53 from both sides in the width direction. By this configuration, in the present modification, too, the stand seat portion 56 neighbors at least one protrusion 53 constituting the protrusion structure portion 50, from the width direction of the protruding stand portion 52.

In regard to the joining jig 41 of the present modification, in one preferable example, the stand seat portion 56 does not protrude to the side on which the stand side portion (first stand side portion) 57 faces, with respect to the protrusion 53 forming the protrusion structure portion 50. By this configuration, the stand seat portion 56 does not protrude to the side on which the stand side portion 57 faces, with respect to the protrusion structure portion 50. In addition, in regard to the joining jig 41 of the present modification, in a more preferable example, the stand seat portion 56 protrudes neither to the side on which the stand side portion 57 faces, nor to the side on which the stand side portion (second stand side portion) 58 faces, with respect to the protrusion 53 forming the protrusion structure portion 50. In this case, the stand seat portion 56 protrudes neither to one side nor to the other side in the depth direction of the protruding stand portion 52, with respect to the protrusion structure portion 50.

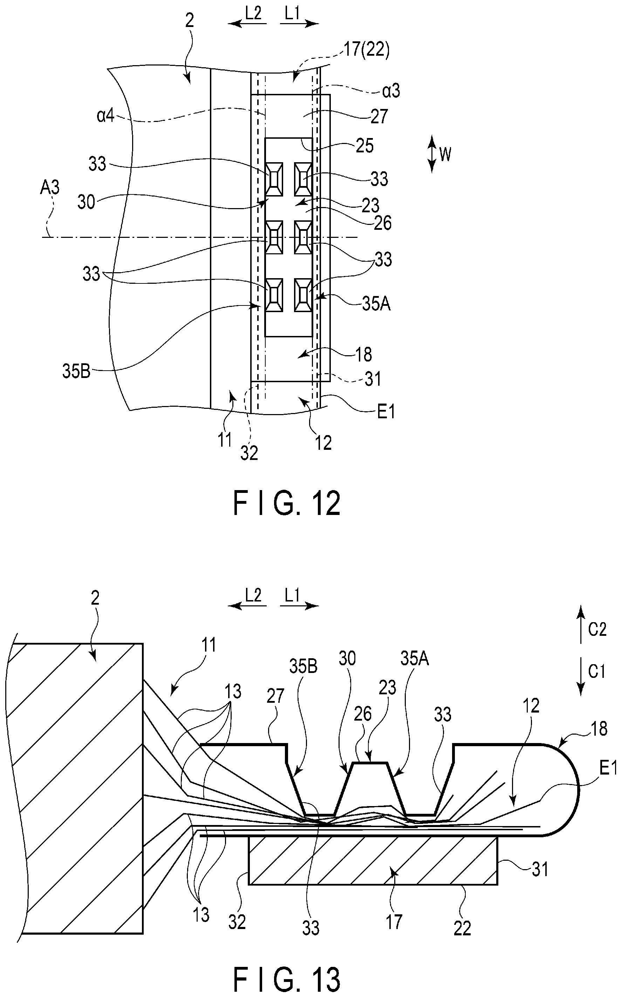

Also in a third modification illustrated in FIG. 12 and FIG. 13, in the joint part of the current collecting bundle portion 12 and lead 17, the groove 23 and at least one recess 33 are formed. In addition, the groove 23 does not protrude to the side on which the current collecting bundle portion 12 protrudes in the length direction of the electrode group 2, with respect to the lead 17. Besides, also in the present modification, in one preferable example, the groove 23 does not protrude to the opposite side, either, to the side on which the current collecting bundle portion 12 protrudes in the length direction of the electrode group 2, with respect to the lead 17.

Here, FIG. 12 and FIG. 13 schematically illustrate an example of a configuration of a joint part (connection part) of one current collecting bundle portion 12 of the electrode group 2 to the lead 17, and a vicinity thereof. FIG. 12 illustrates a state as viewed from one side in the thickness direction of the electrode group 2 (the depth direction of the battery 1 and the stacking direction of the current collecting strip portions 13), and illustrates a state as viewed from an opposite side to the side on which the lead 17 (leg plate portion 22) is stacked in the thickness direction of the electrode group 2. FIG. 13 illustrates a cross section along an imaginary line A3 in FIG. 12 by a cross-sectional view, and illustrates a cross section perpendicular or substantially perpendicular to the width direction of the electrode group 2 (the height direction of the battery 1).

Also in the present modification, like the first embodiment and the like, the recess structure portion 30 is composed of a plurality of recesses 33. In addition, the groove bottom portion 26 neighbors at least one of the recesses 33 constituting the recess structure portion 30, from the width direction of the electrode group 2. Also in the present modification, like the first embodiment and the like, in the recess structure portion 30, a recess string 35A, 35B, in which the recesses 33 are arranged in the width direction of the electrode group 2, is formed. However, in the present modification, a plurality of recess strings 35A and 35B are formed, and the recess strings 35A and 35B are disposed with a displacement from each other in the length direction of the electrode group 2. Because of this configuration, in the present modification, at least one of the recesses 33 is displaced from any one of the other recesses 33 in the length direction of the electrode group 2. Accordingly, a separation distance of at least one of the recesses 33 from the protruding end E1 of the current collecting bundle portion 12 in the length direction of the electrode group 2 is different from a separation distance of any one of the other recesses 33 from this protruding end E1.

Here, among the recesses 33, a recess (closest recess) 33M that is closest to the protruding end E1 of the current collecting bundle portion 12, and a recess (remotest recess) 33N that is remotest from the protruding end E1 of the current collecting bundle portion 12, are defined. In the configuration of the present modification in which at least one of the recesses 33 is displaced from any one of the other recesses 33 in the length direction of the electrode group 2, the recesses 33 include at least one recess 33M and at least one recess 33N. In addition, depending on the arrangement of the recesses 33 constituting the recess structure portion 30, a plurality of recesses 33 may be present in regard to at least either the recess 33M or the recess 33N. In the example of FIG. 12 and FIG. 13, in the recess structure portion 30, three recesses 33 forming the recess string 35A are recesses (closest recesses) 33M, and three recesses 33 forming the recess string 35B are recesses (remotest recesses) 33N. Note that the recess (closest recess) 33M is also referred to as "first recess", and the recess (remotest recess) 33N is also referred to as "second recess".

In regard to the present modification, in one preferable example, the groove 23 (groove bottom portion 26) does not protrude to the side on which the current collecting bundle portion 12 protrudes (the outside in the length direction of the electrode group 2), with respect to at least one recess 33 that is the recess (closest recess) 33M. For example, in the example of FIG. 12 and FIG. 13, the groove 23 does not protrude to the side on which the current collecting bundle portion 12 protrudes, with respect to each of the three recesses 33 forming the recess string 35A. By this configuration, the groove 23 does not protrude to the side on which the current collecting bundle portion 12 protrudes, with respect to the recess structure portion 30. Note that in the recess structure portion 30 of the present modification, for example, a position through which an imaginary line α3 (see FIG. 12) passes is an end on the side on which the current collecting bundle portion 12 protrudes.

Additionally, in regard to the present modification, in a more preferable example, the groove 23 does not protrude to the side on which the current collecting bundle portion 12 protrudes, with respect to at least one recess 33 that is the recess 33M, and does not protrude to the opposite side (the inside in the length direction of the electrode group 2) to the side on which the current collecting bundle portion 12 protrudes, with respect to at least one recess 33 that is the recess (remotest recess) 33N. For example, in the example of FIG. 12 and FIG. 13, the groove 23 does not protrude to the side on which the current collecting bundle portion 12 protrudes, with respect to each of the three recess 33 forming the recess string 35A, and does not protrude to the opposite side to the side on which the current collecting bundle portion 12 protrudes, with respect to each of the three recess 33 forming the recess string 35B. By this configuration, the groove 23 protrudes neither to one side nor to the other side in the length direction of the electrode group 2, with respect to the recess structure portion 30. Note that in the recess structure portion 30 of the present modification, for example, a position through which an imaginary line α4 (see FIG. 12) passes is an end on the opposite side to the side on which the current collecting bundle portion 12 protrudes.

Additionally, in the present modification, the groove bottom portion 26 of the groove 23 extends between the recess strings 35A and 35B that neighbor each other in the length direction of the electrode group 2. Thus, in the present modification, the recesses 33 constituting the recess structure portion 30 includes two recesses 33 that are spaced apart in the length direction of the electrode group 2. In addition, the groove bottom portion 26 of the groove 23 extends between the two recesses 33 that are spaced apart in the length direction.

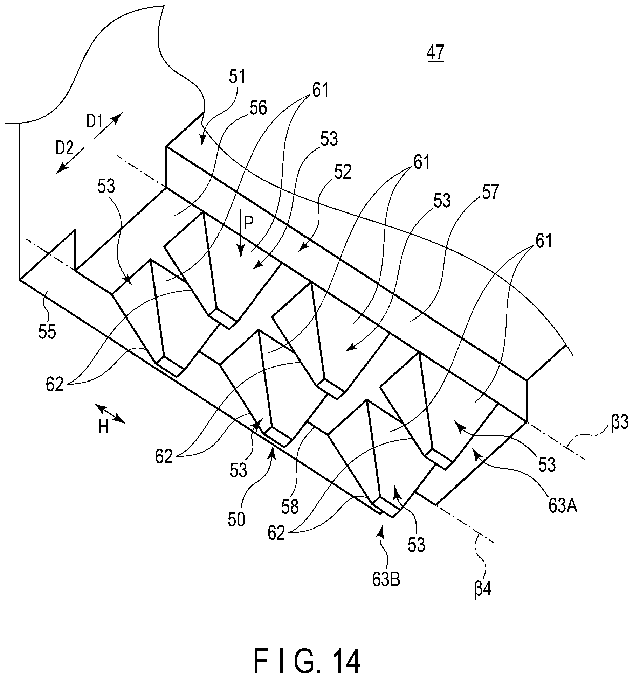

FIG. 14 schematically illustrates, by a perspective view, an example of a configuration of a joining tip portion 47 of a joining jig 41 according to the third modification. As illustrated in FIG. 14 and the like, also in the present modification, in the joining of the current collecting bundle portion 12 to the lead 17, use is made of the joining jig 41 in which the stand seat portion 56 forms the protruding end of the protruding stand portion 52 that protrudes from the base portion 51, and each of at least one protrusion 53 further protrudes from the stand seat portion 56 toward the protruding direction of the protruding stand portion 52. Then, like the above-described embodiment and the like, the joining is performed. Also in the present modification, in the joining, the stand seat portion 56 and at least one protrusion 53 are put in contact with the joining target portion, in the state in which the stand seat portion 56 does not protrude, with respect to the lead 17, to the side on which the current collecting bundle portion 12 protrudes in the length direction of the electrode group 2. Besides, in the joint part of the lead 17 and current collecting bundle portion 12, the groove bottom portion 26 of the groove 23 is formed in the part with which the stand seat portion 56 is put in contact, and the recess 33 is formed in each of the parts with which at least one protrusion 53 is put in contact.

Also in the joining jig 41 used in the present modification, the stand seat portion 56 neighbors at least one of the protrusions 53 constituting the protrusion structure portion 50, from the width direction of the protruding stand portion 52. In addition, like the first embodiment and the like, in the protrusion structure portion 50 of the joining jig 41, a protrusion string 63A, 63B, in which a plurality of protrusions 53 are arranged in the width direction of the protruding stand portion 52, is formed. However, in the present modification, a plurality of protrusion strings 63A and 63B are formed, and the protrusion strings 63A and 63B are disposed with a displacement from each other in the depth direction of the protruding stand portion 52. Because of this configuration, in the present modification, at least one of the protrusions 53 is displaced from any one of the other protrusions 53 in the depth direction of the protruding stand portion 52. Accordingly, a separation distance of at least one of the protrusions 53 from the stand side portion 57 in the depth direction of the protruding stand portion 52 is different from a separation distance of any one of the other protrusions 53 from the stand side 57 in the depth direction of the protruding stand portion 52.

Here, among the protrusions 53, a protrusion (closest protrusion) 53M that is closest to the stand side portion (first stand side portion) 57, and a protrusion (remotest protrusion) 53N that is remotest from the stand side portion 57, are defined. In the configuration of the present modification in which at least one of the protrusions 53 is displaced from any one of the other protrusions 53 in the depth direction of the protruding stand portion 52, the protrusions 53 include at least one protrusion 53M and at least one protrusion 53N. In addition, depending on the arrangement of the protrusions 53 constituting the protrusion structure portion 50, a plurality of protrusions 53 may be present in regard to at least either the protrusion 53M or the protrusion 53N. In the example of FIG. 14, in the protrusion structure portion 50, three protrusions 53 forming the protrusion string 63A are protrusions (closest protrusions) 53M, and three protrusions 53 forming the protrusion string 63B are protrusions (remotest protrusions) 53N. Note that the protrusion 53M is also referred to as "first protrusion", and the protrusion 53N is also referred to as "second protrusion". In addition, among the protrusions 53, the protrusion 53M is remotest from the stand side portion (second stand side portion) 58, and the protrusion 53N is closest to the stand side portion 58.

In regard to the present modification, in one preferable example, the stand seat portion 56 does not protrude to the side on which the stand side portion 57 faces, with respect to at least one protrusion 53 that is the protrusion (closest protrusion) 53M. For example, in the example of FIG. 14, the stand seat portion 56 does not protrude to the side on which the stand side portion 57 faces, with respect to each of the three protrusions 53 forming the protrusion string 63A. By this configuration, the stand seat portion 56 does not protrude to the side on which the stand side portion 57 faces, with respect to the protrusion structure portion 50. In addition, in each of at least one protrusion 53 that is the protrusion 53M, the protrusion side portion (first protrusion side portion) 61 is connected to the stand side portion (first stand side portion) 57 of the protruding stand portion 52 without the stand seat portion 56 being interposed. Note that in the protrusion structure portion 50 of the present modification, for example, a position through which an imaginary line β3 (see FIG. 14) passes becomes an end on the side on which the stand side portion 57 faces.

Additionally, in regard to the present modification, in a more preferable example, the stand seat portion 56 does not protrude to the side on which the stand side portion 57 faces, with respect to at least one protrusion 53 that is the protrusion 53M, and does not protrude to the side on which the stand side portion 58 faces (the opposite side to the side on which the stand side portion 57 faces), with respect to at least one protrusion 53 that is the protrusion (remotest protrusion) 53N. For example, in the example of FIG. 14, the stand seat portion 56 does not protrude to the side on which the stand side portion 57 faces, with respect to each of the three protrusions 53 forming the protrusion string 63A, and does not protrude to the side on which the stand side portion 58 faces, with respect to each of the three protrusions 53 forming the protrusion string 63B. By this configuration, the stand seat portion 56 protrudes neither to one side nor to the other side in the depth direction of the protruding stand portion 52, with respect to the protrusion structure portion 50. In addition, in each of at least one protrusion 53 that is the protrusion 53M, the protrusion side portion 61 is connected to the stand side portion 57 of the protruding stand portion 52 without the stand seat portion 56 being interposed. Furthermore, in each of at least one protrusion 53 that is the protrusion 53N, the protrusion side portion (second protrusion side portion) 62 is connected to the stand side portion (second stand side portion) 58 of the protruding stand portion 52 without the stand seat portion 56 being interposed. Note that in the protrusion structure portion 50 of the present modification, for example, a position through which an imaginary line β4 (see FIG. 14) passes becomes an end on the side on which the stand side portion 58 faces.

In one modification, in the recess structure portion 30, three or more recess strings 35, in each of which a plurality of recesses 33 are arranged along the width direction of the electrode group 2, are formed. In this case, too, at least one of the recesses 33 is displaced from any one of the other recesses 33 in the length direction of the electrode group 2. Also in the present modification, like the third modification, the recesses 33M and 33N are defined. In addition, like any one of the examples described in the third modification, the groove 23 and at least one recess 33 are formed in the joint part of the current collecting bundle portion 12 and lead 17. However, in each of the cases, the groove 23 does not protrude, with respect to the lead 17, to the side on which the current collecting bundle portion 12 protrudes in the length direction of the electrode group 2.

Additionally, in the present modification, in the joining jig 41, three or more protrusion strings 63, in each of which a plurality of protrusions 53 are arranged in the width direction of the protruding stand portion 52, are formed. In this case, too, at least one of the protrusions 53 is displaced from any one of the other protrusions 53 in the depth direction of the protruding stand portion 52. Also in the present modification, like the third modification, the protrusions 53M and 53N are defined. In addition, like any one of the examples described in the third modification, the stand seat portion 56 and at least one protrusion 53 are formed in the joining tip portion 47. However, in each of the cases, in the joining of the current collecting bundle portion 12 to the lead 17, the stand seat portion 56 and at least one protrusion 53 are put in contact with the joining target portion in the state in which the stand seat portion 56 does not protrude, with respect to the lead 17, to the side on which the current collecting bundle portion 12 protrudes in the length direction of the electrode group 2.

Additionally, in one modification, in a configuration in which the recess string 35, in which a plurality of recesses 33 are arranged along the width direction of the electrode group 2, is not formed in the recess structure portion 30, at least one of the recesses 33 is displaced from any one of the other recesses 33 in the length direction of the electrode group 2. Also in the present modification, like the third modification, the recesses 33M and 33N are defined. In addition, like any one of the examples described in the third modification, the groove 23 and at least one recess 33 are formed in the joint part of the current collecting bundle portion 12 and lead 17. However, in each of the cases, the groove 23 does not protrude, with respect to the lead 17, to the side on which the current collecting bundle portion 12 protrudes in the length direction of the electrode group 2.

Additionally, in the present modification, in a configuration in which the protrusion string 63, in which a plurality of protrusions 53 are arranged along the width direction of the protruding stand portion 52, is not formed in the joining jig 41. However, also in the present modification, at least one of the protrusions 53 is displaced from any one of the other protrusions 53 in the depth direction of the protruding stand portion 52, and, like the third modification, the protrusions 53M and 53N are defined. In addition, like any one of the examples described in the third modification, the stand seat portion 56 and at least one protrusion 53 are formed in the joining tip portion 47. However, in each of the cases, in the joining of the current collecting bundle portion 12 to the lead 17, the stand seat portion 56 and at least one protrusion 53 are put in contact with the joining target portion in the state in which the stand seat portion 56 does not protrude, with respect to the lead 17, to the side on which the current collecting bundle portion 12 protrudes in the length direction of the electrode group 2.

Additionally, in one modification, in each of the paired uncoated portions 11, a plurality of current collecting bundle portions 12 are formed. In this case, in each of the paired uncoated portions 11, the current collecting bundle portions 12 are formed in such a manner as to be spaced apart in the thickness direction of the electrode group 2. Also in the case where a plurality of current collecting bundle portions 12 are formed in each of the uncoated portions 11, each of the current collecting bundle portions 12 protrudes to one side in the length direction of the electrode group 2, and the current collecting strip portions 13 are stacked in each current collecting bundle portion 12 in the thickness direction of the electrode group 2. In the present modification, each of the leads 17 is provided with a plurality of leg plate portions 22, and each of the leads 17 is provided with the same number of leg plate portions 22 as the current collecting bundle portions 12 formed in the uncoated portion 11 that is connected. In the present modification, each of the current collecting bundle portions 12 is joined to a corresponding one of the paired leads 17 by a corresponding one of the leg plate portions 22. Also in the present modification, like any one of the above-described embodiment and the like, each of the current collecting bundle portions 12 is joined to the leg plate portion 22.

Additionally, in one modification, the battery 1 is not provided with the clip 18, and the clip 18 is not attached to each of the current collecting bundle portions 12. In this case, in each of the uncoated portions 11, the current collecting bundle portion 12 is directly joined (connected) to the corresponding one of the paired leads 17. In the present modification, on the outer surface of the current collecting bundle portion 12, the groove 23 opens to the opposite side to the side on which the lead 17 is stacked in the thickness direction of the electrode group 2. Also in the present modification, like any one of the above-described embodiment and the like, each of the current collecting bundle portions 12 is joined to the lead 17.

Additionally, in the above-described embodiment and the like, the container unit 3 is composed of the outer container 5 and lid 6, but the configuration or the like of the container unit 3 is not limited to this. In one modification, the container unit 3 is composed of a laminate film.

Additionally, in the example of FIG. 1 and the like, the paired uncoated portions 11 protrude to mutually opposite sides in the length direction of the electrode group 2, but the example is not limited to this. In one modification, in the electrode group 2, the negative electrode uncoated portion protrudes to the side on which the positive electrode uncoated portion protrudes in the length direction. In this case, the paired uncoated portions 11 are spaced apart from each other in the width direction of the electrode group, and are not in contact with each other. In one example of the present modification, the electrode group 2 is disposed in the inner cavity 10 of the outer container 5 in a state in which the thickness direction of the electrode group 2 extends along the depth direction of the battery 1, the length direction of the electrode group 2 extends along the height direction of the battery 1, and the width direction of the electrode group 2 extends along the lateral direction of the battery 1. In addition, in the inner cavity 10, the paired uncoated portions 11 (positive electrode uncoated portion and negative electrode uncoated portion) protrude to the side on which the lid 6 is located in the height direction of the battery 1. Also in the present modification, like any one of the above-described embodiment and the like, in each of the uncoated portions 11, the current collecting bundle portion 12 is joined to the lead 17.

Note that in each of the above-described modifications, in the joint part of the current collecting bundle portion 12 to the lead 17, the groove 23 does not protrude, with respect to the lead 17, to the side on which the current collecting bundle portion 12 protrudes in the length direction of the electrode group 2. In addition, in the joining of the current collecting bundle portion 12 to the lead 17, the stand seat portion 56 and at least protrusion 53 are put in contact with the joining target portion in the state in which the stand seat portion 56 does not protrude, with respect to the lead 17, to the side on which the current collecting bundle portion 12 protrudes in the length direction of the electrode group 2.

Additionally, in the electrode group 2, it suffices that at least one of the paired uncoated portions 11, that is, at least one of the positive electrode uncoated portion and the negative electrode uncoated portion, is joined to the lead 17, in the same manner as in any one of the above-described embodiment and the like. In other words, it suffices that at least one current collecting bundle portion 12 of at least one pair of current collecting bundle portions 12 formed in the electrode group 2 is joined to the lead 17, in the same manner as in any one of the above-described embodiment and the like.

According to at least one of these embodiments or examples, in the joint part of the lead and current collecting bundle portion, the groove is recessed to the groove bottom portion toward the side on which the lead is located in the thickness direction, and does not protrude, with respect to the lead, to the side on which the current collecting bundle portion protrudes in the length direction. In addition, each of at least one recess is further recessed from the groove bottom portion of the recess toward the side on which the lead is located. Thereby, there can be provided a battery, a joining jig, a joining device and a manufacturing method of a battery, which can improve the strength of joining in a joint part, and can suppress improper deformation of the joint part due to joining, in the joining of the current collecting bundle portion of the electrode group to the lead.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A battery (1) comprising:
an electrode group (2) including a current collecting bundle portion (12) protruding to one side in a length direction (L1,L2);
a lead (17) having electrical conductivity and joined to the current collecting bundle portion (12) in a state in which the lead (17) is stacked on the current collecting bundle portion (12) from one side in a thickness direction (C1,C2) of the electrode group (2), the thickness direction (C1,C2) crossing the length direction (L1,L2);
a groove (23) including a groove bottom portion (26) and recessed to the groove bottom portion (26) toward a side on which the lead (17) is located in the thickness direction (C1,C2) in a joint part of the lead (17) and the current collecting bundle portion (12), the groove (23) being configured to not protrude, with respect to the lead (17), to a side on which the current collecting bundle portion (12) protrudes in the length direction (L1,L2); and
at least one recess (33) further recessed from the groove bottom portion (26) of the groove (23) toward the side on which the lead (17) is located.

2. The battery (1) of Claim 1, wherein the groove (23) does not protrude to the side on which the current collecting bundle portion (12) protrudes, with respect to a recess structure portion (30) composed of the at least one recess (33).

3. The battery (1) of Claim 1 or 2, wherein the groove bottom portion (26) of the groove (23) neighbors at least one of the at least one recess (33) from a width direction of the electrode group, the width direction (W) crossing both the length direction (L1,L2) and the thickness direction (C1,C2).

4. The battery (1) of Claim 3, wherein the groove bottom portion (26) of the groove (23) neighbors a recess structure portion (30) composed of the at least one recess (33), from an outside in the width direction (W).

5. The battery (1) of Claim 3 or 4, wherein
the battery (1) includes a plurality of recesses (33) as the at least one recess (33),
the recesses (33) include two recesses (33) spaced apart in the width direction (W), and
the groove bottom portion (26) of the groove (23) extends between the two recesses (33) spaced apart in the width direction (W).

6. The battery (1) of any one of Claims 1 to 5, wherein the groove (23) does not protrude, with respect to the lead (17), to an opposite side to the side on which the current collecting bundle portion (12) protrudes.

7. A joining jig (41) comprising:
a base portion (51);
a protruding stand portion (52) protruding from the base portion (51), the protruding stand portion (52) including a stand seat portion (56) forming a protruding end from the base portion (51), and a first stand side portion (57) extending toward a protruding direction (P) from the base portion (51) in a state in which the first stand side portion (57) faces one side in a depth direction (D1,D2) crossing the protruding direction (P);
at least one protrusion (53) further protruding from the stand seat portion (56) toward the protruding direction (P) of the protruding stand portion (52), wherein
the stand seat portion (56) does not protrude to a side on which the first stand side portion (57) faces in the depth direction (D1,D2) of the protruding stand portion (52), with respect to a protrusion structure portion (50) composed of the at least one protrusion (53).

8. The joining jig (41) of Claim 7, wherein the stand seat portion (56) of the protruding stand portion (52) neighbors at least one of the at least one protrusion (53) from a width direction (H) of the protruding stand portion (52), the width direction (H) crossing both the protruding direction (P) and the depth direction (D1,D2).

9. The joining jig (41) of Claim 8, wherein the stand seat portion (56) of the protruding stand portion (52) neighbors the protrusion structure portion (50) from an outside in the width direction (H).

10. The joining jig (41) of any one of Claims 7 to 9, wherein
the protruding stand portion (52) includes a second stand side portion (58) extending toward the protruding direction (P) from the base portion (51) in a state in which the second stand side portion (58) faces an opposite side to the side on which the first stand side portion (57) faces in the depth direction (D1,D2), and
the stand seat portion (56) does not protrude to a side on which the second stand side portion (58) faces in the depth direction (D1,D2) of the protruding stand portion (52), with respect to the protrusion structure portion (50) .

11. A joining device (40) comprising:
the joining jig (41) of any one of Claims 7 to 10;
a stage (42) configured to clamp, in joining of a current collecting bundle portion (12) protruding to one side in a length direction (L1,L2) in an electrode group (2) to a lead (17), a joining target portion in which the current collecting bundle portion (12) and the lead (17) are stacked, between the stage (42) and the joining jig (41) in a state in which the lead (17) is stacked on the current collecting bundle portion (12) from one side in a thickness direction (C1,C2) of the electrode group (2), the thickness direction (C1,C2) crossing the length direction (L1,L2), and configured to come in contact with the joining target portion from a side on which the lead (17) is stacked in the thickness direction (C1,C2);
a pressuring unit (45) configured to apply pressure to at least one of the joining jig (41) and the stage (42) in a state in which the joining target portion is clamped between the joining jig (41) and the stage (42), thereby putting the stand seat portion (56) and the at least one protrusion (53) of the protrusion structure portion (50) of the joining jig (41) into contact with the joining target portion in a state in which the stand seat portion (56) does not protrude, with respect to the lead (17), to a side on which the current collecting bundle portion (12) protrudes in the length direction (L1,L2); and
an ultrasonic transducer (43) configured to transmit ultrasonic vibration to the joining target portion through the joining jig (41) in a state in which the joining target portion is clamped between the joining jig (41) and the stage (42).

12. A manufacturing method of a battery (1), comprising:
stacking, in an electrode group (2) in which a current collecting bundle portion (12) protrudes to one side in a length direction (L1,L2), a lead (17) on the current collecting bundle portion (12) from one side in a thickness direction (C1,C2) of the electrode group (2), the thickness direction (C1,C2) crossing the length direction (L1,L2);
joining a joining target portion in which the current collecting bundle portion (12) and the lead (17) are stacked, by using a joining jig (41) in which a stand seat portion (56) forms a protruding end of a protruding stand portion (52) protruding from a base portion (51), and each of at least one protrusion (53) further protrudes from the stand seat portion (56) toward a protruding direction (P) of the protruding stand portion (52); and
putting, in joining of the joining target portion, the stand seat portion (56) and the at least one protrusion (53) of the joining jig (41) into contact with the joining target portion from an opposite side to a side on which the lead (17) is stacked in the thickness direction (C1,C2), in such a manner that the stand seat portion (56) and the at least one protrusion (53) are put in contact with the joining target portion in a state in which the stand seat portion (56) does not protrude, with respect to the lead (17), to a side on which the current collecting bundle portion (12) protrudes in the length direction (L1,L2).

13. The manufacturing method of Claim 12, wherein
in the joining jig (41) used for the joining of the joining target portion, a stand side portion (57) of the protruding stand portion (52) extends toward the protruding direction (P) from the base portion (51) in a state in which the stand side portion (57) faces one side in a depth direction (D1,D2) of the protruding stand portion (52), the depth direction (D1,D2) crossing the protruding direction (P), and the stand seat portion (56) does not protrude to a side on which the stand side portion (57) faces in the depth direction (D1,D2), with respect to a protrusion structure portion (50) composed of the at least one protrusion (53), and
in the putting the stand seat portion (56) and the at least one protrusion (53) into contact with the joining target portion, the stand seat portion (56) and the at least one protrusion (53) are put in contact with the joining target portion in a state in which the stand side portion (57) faces a side on which the current collecting bundle portion (12) protrudes.

14. The manufacturing method of Claim 12 or 13, further comprising clamping the joining target portion between the joining jig (41) and a stage (42), wherein
in the joining of the joining target portion, pressure is applied to at least one of the joining jig (41) and the stage (42) in a state in which the joining target portion is clamped between the joining jig (41) and the stage (42), thereby putting the stand seat portion (56) and the at least one protrusion (53) of the joining jig (41) into contact with the joining target portion, and
in the joining of the joining target portion, ultrasonic vibration is transmitted to the joining target portion through the joining jig (41) in a state in which the joining target portion is clamped between the joining jig (41) and the stage (40).
